# EUROPEAN PATENT APPLICATION

(11) **EP 4 475 447 A1**
(43) Date of publication of application: **11.12.2024**
(21) Application number: 23765842.2
(22) Date of filing: 28.02.2023
(51) Int. Cl.: H04B 1/7163

(54) **ULTRA-WIDEBAND BASED INFORMATION FEEDBACK METHOD AND DEVICE**

(30) Priority: 07.03.2022 CN 202210225950
(71) Applicant: Huawei Technologies Co., Ltd., Shenzhen, Guangdong 518129 (CN)
(72) Inventor: QIAN, Bin, Shenzhen, Guangdong 518129 (CN); PENG, Xiaohui, Shenzhen, Guangdong 518129 (CN); MA, Mengyao, Shenzhen, Guangdong 518129 (CN); YANG, Xun, Shenzhen, Guangdong 518129 (CN); LI, Yunbo, Shenzhen, Guangdong 518129 (CN)
(74) Representative: Körber, Martin Hans
(86) International application number: PCT/CN2023/078881
(87) International publication number: WO 2023/169264

(57) **Abstract**

This application discloses an ultra wideband UWB-based information feedback method and an apparatus. The method includes: A first communication apparatus sends control information to a second communication apparatus, and the second communication apparatus sends feedback information to the first communication apparatus after receiving the control information; and the first communication apparatus receives the feedback information, and processes the feedback information to obtain information related to a target. The control information includes a first field, and the first field indicates a feedback manner of a sensing measurement result; and the feedback information includes a second field, the second field is used to carry second parameter information, the second parameter information is determined based on the feedback manner and first parameter information, and the first parameter information is a sensing measurement result obtained by the second communication apparatus based on an ultra-wideband UWB impulse. Solutions provided in this application effectively improve a sensing procedure, and may be applied to 802.15 series protocols, for example, the 802.15.4a protocol, the 802.15.4z protocol, or the 802.15.4ab protocol.

## Description

This application claims priority to Chinese Patent Application No. 202210225950.9, filed with the China National Intellectual Property Administration on March 7, 2022 and entitled "ULTRA WIDEBAND-BASED INFORMATION FEEDBACK METHOD AND APPARATUS", which is incorporated herein by reference in its entirety.

### TECHNICAL FIELD

This application relates to the field of communication technologies, and in particular, to an ultra wideband-based information feedback method and an apparatus.

### BACKGROUND

An ultra-wideband (ultra-wideband, UWB) technology is a wireless carrier communication technology, and for example, uses nanosecond-level non-sinusoidal wave narrow impulses to transmit data. Therefore, the ultra-wideband (ultra-wideband UWB) technology occupies a wide spectrum range. Due to a narrow impulse and low radiation spectral density, UWB has advantages of a strong multipath resolution capability, low power consumption, high confidentiality, and the like.

Based on characteristics of UWB, UWB impulses can be used for sensing. During sensing application, information such as a distance, an angle, or a speed of a target can be extracted by detecting an echo of a UWB signal on the target. In a scenario of sensing application, a sensing initiator is a transmitting end of a UWB signal, and a sensing responder is a receiving end of a UWB echo signal. The sensing initiator may obtain information related to the target based on feedback information sent by the sensing responder.

Therefore, how to exchange the feedback information between the sensing initiator and the sensing responder needs to be resolved urgently.

### SUMMARY

This application provides a UWB-based information feedback method, to effectively improve an interaction process of sensing based on a UWB impulse.

According to a first aspect, an embodiment of this application provides an ultra wideband-based information feedback method, where the method includes: A first communication apparatus sends control information to a second communication apparatus, where the control information includes a first field, and the first field indicates a feedback manner of a sensing measurement result; and the first communication apparatus receives feedback information from the second communication apparatus, where the feedback information includes a second field, the second field is used to carry second parameter information, the second parameter information is determined based on the feedback manner and first parameter information, and the first parameter information is a sensing measurement result obtained by the second communication apparatus based on a UWB impulse.

In embodiments of this application, the first communication apparatus indicates the feedback manner to the second communication apparatus, so that the second communication apparatus can clearly learn of a processing manner of the first parameter information. Therefore, a UWB impulse-based sensing procedure is effectively improved, and communication efficiency of both communication parties is also effectively ensured.

According to a second aspect, an embodiment of this application provides an ultra wideband-based information feedback method, where the method includes: A second communication apparatus receives control information, where the control information includes a first field, and the first field indicates a feedback manner of a sensing measurement result; and the second communication apparatus sends feedback information to a first communication apparatus, where the feedback information includes a second field, the second field is used to carry second parameter information, the second parameter information is determined based on the feedback manner and first parameter information, and the first parameter information is a sensing measurement result obtained by the second communication apparatus based on an ultra-wideband UWB impulse.

With reference to the first aspect or the second aspect, in a possible implementation, the feedback information further includes a third field, and the third field indicates a compression manner of the first parameter information; and that the second parameter information is determined based on the feedback manner and first parameter information includes: The second parameter information is determined based on the feedback manner, the compression manner, and the first parameter information.

In embodiments of this application, the third field indicates a specific compression manner, so that the second communication apparatus can effectively learn of a manner of processing the first parameter information by the second communication apparatus, and process the first parameter information in the compression manner. This can effectively reduce signaling overheads of the feedback information.

With reference to the first aspect or the second aspect, in a possible implementation, the feedback manner includes at least one of a feedback manner based on differential information or a feedback manner based on reference information and differential information, and the differential information is determined based on the first parameter information and the reference information.

In embodiments of this application, signaling overheads of the feedback information can be effectively reduced in the feedback manner based on differential information or the feedback manner based on reference information and differential information. In addition, the signaling overheads of the feedback information can be further reduced in the feedback manner based on differential information. In the feedback manner based on reference information and differential information, the first communication apparatus directly obtains, based on the feedback information, the reference information included in the feedback information. This is more direct.

With reference to the first aspect or the second aspect, in a possible implementation, the compression manner includes at least one of a time-based compression manner or a value-based compression manner.

In embodiments of this application, the time-based compression manner is easier to implement. When a dynamic range of parameters is large, feedback precision can be effectively ensured in the value-based compression manner. For example, the value-based compression manner is more suitable for scenarios where parameters change greatly.

With reference to the first aspect or the second aspect, in a possible implementation, the control information further includes a fourth field, and the fourth field indicates a number of sensing time subunits included in one sensing time unit.

In embodiments of this application, the number of sensing time subunits included in one sensing time unit may indicate a period of the feedback information. The number of sensing time subunits included in one sensing time unit is proportional to the period of the feedback information. For example, a larger number of sensing time subunits included in one sensing time unit indicates a larger period of the feedback information and a lower feedback frequency of the feedback information. Because the feedback information needs to be fed back within a sensing time unit, the fourth field indicates the sensing time subunits included in one sensing time unit, so that the feedback period of the feedback information can be effectively indicated, and a time period in which the feedback information is located can be indicated. Therefore, a sensing procedure can be effectively improved, and communication efficiency of both communication parties can be effectively ensured.

With reference to the first aspect or the second aspect, in a possible implementation, the second parameter information includes at least one of path loss information, a delay, an azimuth angle of arrival AOA, and a zenith angle of arrival ZOA.

With reference to the first aspect or the second aspect, in a possible implementation, the feedback information further includes a fifth field, the fifth field indicates a data mode of the path loss information, and the data mode includes at least one of a data mode based on an amplitude and a phase or a data mode based on an in-phase component and a quadrature component.

In embodiments of this application, the fifth field indicates the data mode of the path loss information, so that forms of the path loss information are more diversified, and different feedback forms of sensing information can be effectively selected for different application scenarios. For example, when a bit width (namely, an occupied bit length) of the path loss information is small, precision of feedback with an amplitude and a phase is higher.

With reference to the first aspect or the second aspect, in a possible implementation, the feedback information further includes a sixth field, and the sixth field indicates whether reference information is present in the feedback information.

In embodiments of this application, the sixth field indicates whether reference information is present in the feedback information. This can further improve a UWB impulse-based sensing procedure. In addition, feedback information in a "handshake" form is added to enhance communication reliability and improve communication efficiency of both communication parties.

According to a third aspect, an embodiment of this application provides a first communication apparatus, configured to implement the method in the first aspect or any possible implementation of the first aspect. The first communication apparatus includes units that perform the method according to any one of the first aspect or the possible implementations of the first aspect.

According to a fourth aspect, an embodiment of this application provides a second communication apparatus, configured to perform the method in any one of the second aspect or the possible implementations of the second aspect. The second communication apparatus includes units that perform the method according to any one of the second aspect or the possible implementations of the second aspect.

In the third aspect or the fourth aspect, the first communication apparatus and the second communication apparatus may include a transceiver unit and a processing unit. For specific descriptions of the transceiver unit and the processing unit, refer to the apparatus embodiments provided below.

According to a fifth aspect, an embodiment of this application provides a first communication apparatus. The first communication apparatus includes a processor, configured to perform the method according to any one of the first aspect or the possible implementations of the first aspect. Alternatively, the processor is configured to execute a program stored in a memory. When the program is executed, the method according to any one of the first aspect or the possible implementations of the first aspect is performed.

In a possible implementation, the memory is located outside the first communication apparatus.

In a possible implementation, the memory is located inside the first communication apparatus.

In this embodiment of this application, the processor and the memory may alternatively be integrated into one device. In other words, the processor and the memory may alternatively be integrated together.

In a possible implementation, the first communication apparatus further includes a transceiver. The transceiver is configured to receive a signal or send a signal.

According to a sixth aspect, an embodiment of this application provides a second communication apparatus. The second communication apparatus includes a processor, configured to perform the method according to any one of the second aspect or the possible implementations of the second aspect. Alternatively, the processor is configured to execute a program stored in a memory. When the program is executed, the method according to any one of the second aspect or the possible implementations of the second aspect is performed.

In a possible implementation, the memory is located outside the second communication apparatus.

In a possible implementation, the memory is located inside the second communication apparatus.

In this embodiment of this application, the processor and the memory may alternatively be integrated into one device. In other words, the processor and the memory may alternatively be integrated together.

In a possible implementation, the second communication apparatus further includes a transceiver. The transceiver is configured to receive a signal or send a signal.

According to a seventh aspect, an embodiment of this application provides a first communication apparatus, where the communication apparatus includes a logic circuit and an interface, the logic circuit is coupled to the interface, and the logic circuit is configured to output control information and input feedback information through the interface.

It may be understood that the logic circuit is further configured to perform processing based on feedback information, to obtain information related to a target. The information related to the target includes, for example, information such as a speed, an angle, or attenuation.

According to an eighth aspect, an embodiment of this application provides a second communication apparatus, where the communication apparatus includes a logic circuit and an interface, the logic circuit is coupled to the interface, and the logic circuit is configured to input control information and output feedback information through the interface.

It may be understood that the logic circuit is further configured to determine the feedback information based on the control information.

According to a ninth aspect, an embodiment of this application provides a computer-readable storage medium. The computer-readable storage medium is configured to store a computer program, and when the computer program is run on a computer, the method according to any one of the first aspect or the possible implementations of the first aspect is performed.

According to a tenth aspect, an embodiment of this application provides a computer-readable storage medium. The computer-readable storage medium is configured to store a computer program, and when the computer program is run on a computer, the method according to any one of the second aspect or the possible implementations of the second aspect is performed.

According to an eleventh aspect, an embodiment of this application provides a computer program product. The computer program product includes a computer program or computer code, and when the computer program product runs on a computer, the method in any one of the first aspect or the possible implementations of the first aspect is performed.

According to a twelfth aspect, an embodiment of this application provides a computer program product. The computer program product includes a computer program or computer code, and when the computer program product runs on a computer, the method in any one of the second aspect or the possible implementations of the second aspect is performed.

According to a thirteenth aspect, an embodiment of this application provides a computer program. When the computer program is run on a computer, the method in any one of the first aspect or the possible implementations of the first aspect is performed.

According to a fourteenth aspect, an embodiment of this application provides a computer program. When the computer program is run on a computer, the method in any one of the second aspect or the possible implementations of the second aspect is performed.

According to a fifteenth aspect, an embodiment of this application provides a wireless communication system. The wireless communication system includes a first communication apparatus and a second communication apparatus, the first communication apparatus is configured to perform the method according to any one of the first aspect or the possible implementations of the first aspect, and the second communication apparatus is configured to perform the method according to any one of the second aspect or the possible implementations of the second aspect.

For technical effects achieved in the third aspect to the fifteenth aspect, refer to the technical effect of the first aspect or the second aspect or beneficial effects in the following method embodiments. Details are not described herein.

### BRIEF DESCRIPTION OF DRAWINGS

FIG. 1a and FIG. 1b show sensing scenarios based on one sensing responder according to an embodiment of this application;
FIG. 1c and FIG. 1d show sensing scenarios based on a plurality of sensing responders according to an embodiment of this application;
FIG. 2a is a schematic flowchart of a UWB-based information feedback method according to an embodiment of this application;
FIG. 2b and FIG. 2c are diagrams of UWB-based information feedback scenarios according to an embodiment of this application;
FIG. 3a to FIG. 3c are diagrams of sensing procedures according to an embodiment of this application;
FIG. 4a and FIG. 4b are diagrams of sensing procedures according to an embodiment of this application;
FIG. 5 is a diagram of performing sampling on path loss information according to an embodiment of this application;
FIG. 6 is a diagram of snapshot-based compression according to an embodiment of this application;
FIG. 7 is a diagram of cluster-based compression according to an embodiment of this application;
FIG. 8a is a diagram of CIR parameters in a snapshot 1 according to an embodiment of this application;
FIG. 8b is a diagram of CIR parameters in a snapshot 2 according to an embodiment of this application;
FIG. 8c is a diagram of CIR parameters in a snapshot 10 according to an embodiment of this application; and
FIG. 9 to FIG. 11 are diagrams of structures of communication apparatuses according to an embodiment of this application.

### DESCRIPTION OF EMBODIMENTS

To make the objectives, technical solutions, and advantages of this application clearer, this application is further described with reference to the accompanying drawings.

Terms "first", "second", and the like in the specification, claims, and accompanying drawings of this application are only used to distinguish between different objects, and are not used to describe a specific order. In addition, terms "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned herein mean that specific features, structures, or characteristics described in combination with the embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that the embodiments described herein may be combined with other embodiments.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: only A exists, only B exists, and both A and B exist. A and B may be singular or plural. The character "/" generally indicates an "or" relationship between the associated objects. "At least one of the following" or a similar expression thereof means any combination of these items. For example, at least one of a, b, or c may represent: a, b, c, "a and b", "a and c", "b and c", or "a and b and c".

The technical solutions provided in this application are applicable to a UWB-based wireless personal area network (wireless personal area network, WPAN). For example, a method provided in this application is applicable to institute of electrical and electronics engineers (institute of electrical and electronics engineers, IEEE) 802.15 series protocols, for example, the 802.15.4a protocol, the 802.15.4z protocol, the 802.15.4ab protocol, or a future generation of UWB WPAN standard. Examples are not enumerated herein. The method provided in this application is further applied to various communication systems, for example, an internet of things (internet of things, IoT) system, vehicle to X (Vehicle to X, V2X), a narrow band internet of things (narrow band internet of things, NB-IoT) system, and is applied to a device in vehicle to X, an internet of things node and a sensor in the internet of things (IoT, internet of things), a smart camera in a smart home, a smart remote control, a smart water meter, and a sensor in a smart city. The method provided in this application is also applicable to an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a long term evolution (long term evolution, LTE) system, a 5th-generation (5th-generation, 5G) communication system, a 6th-generation (6th-generation, 6G) communication system, or the like.

A UWB technology is a new wireless communication technology. The UWB technology transmits data by using nanosecond-level non-sinusoidal wave narrow impulses. Modulation is performed on impulses with very steep rise and fall time, and therefore, the technology occupies a wide spectrum range, and a signal has a bandwidth of a gigahertz (GHz) magnitude. A bandwidth used by UWB is usually higher than 1 GHz. A UWB system does not need to generate a sinusoidal carrier signal and can directly transmit an impulse sequence. Therefore, the UWB system has a wide spectrum and low average power. A UWB wireless communication system has advantages such as a strong multipath resolution capability, low power consumption, and high confidentiality, and is conducive to coexistence with other systems, thereby improving spectrum utilization and system capacity. In addition, during short-range communication application, transmit power of a UWB transmitter may be generally lower than 1 mW (milliwatt). Theoretically, interference generated by a UWB signal is only equivalent to white noise of a same broadband. This is conducive to good coexistence between ultra-wideband communication and existing narrowband communication. Therefore, both the UWB system and a narrowband (narrowband NB) communication system can work without interference. A method provided in this application may be implemented by a communication apparatus in a wireless communication system. In a communication apparatus, a module that implements a UWB system function may be referred to as a UWB module (for example, may be configured to send a UWB impulse), and a module that implements a narrowband communication system function may be referred to as a narrowband communication module, the UWB module and the narrowband communication module may be different apparatuses, chips, or the like. This is not limited in embodiments of this application. Certainly, the UWB module and the narrowband communication module may alternatively be integrated into one apparatus or chip. Implementations of the UWB module and the narrowband communication module in the communication apparatus are not limited in embodiments of this application.

Although embodiments of this application are mainly described by using a WPAN as an example, and particularly, a network used in IEEE 802.15 series standards is used as an example for description. However, a person skilled in the art easily understands that, various aspects in this application may be extended to another network using various standards or protocols. For example, a wireless local area network (wireless local area network, WLAN), Bluetooth (BLUETOOTH), a high performance wireless LAN (high performance radio LAN, HIPERLAN) (a wireless standard similar to the IEEE 802.11 standard, mainly used in Europe), a wide area network (WAN), or another network that is now known or developed in the future. Therefore, regardless of used coverage and a used wireless access protocol, various aspects provided in this application are applicable to any appropriate wireless network.

The method provided in this application may be implemented by a communication apparatus in a wireless communication system. The communication apparatus may be an apparatus in a UWB system. For example, the communication apparatus may include but is not limited to a communication server, a router, a switch, a bridge, a computer, a mobile phone, and the like. For another example, the communication apparatus may include a central control point, for example, a personal local area network (personal area network, PAN) or a PAN coordinator. For another example, the communication apparatus may include user equipment (user equipment, UE). The user equipment may include various handheld devices, vehicle mounted devices, wearable devices, Internet of Things (Internet of Things, IoT) devices, computing devices, other processing devices connected to a wireless modem, or the like that have a wireless communication function. Examples are not enumerated herein. For yet another example, the communication apparatus may include a chip, and the chip may be disposed in a communication server, a router, a switch, a user terminal, or the like. Examples are not enumerated herein.

It may be understood that the communication apparatus shown in embodiments of this application may further include a sensing initiator (initiator) or a sensing responder (responder). The sensing initiator and the sensing responder are relative. For example, if the sensing initiator is a party that initiates a sensing process, the sensing responder may be a party that responds based on the party that initiates the sensing process. It may be understood that the sensing initiator is a transmitting end of a UWB signal, and the sensing responder is a receiving end of a UWB echo signal. Alternatively, the sensing initiator may be a receiving end of a UWB echo signal, and the sensing responder is a transmitting end of a UWB signal. The communication apparatus shown in embodiments of this application may be a sensing initiator or a sensing responder. It may be understood that, because a UWB signal sent by the sensing initiator needs to reach a target first, and then reach the sensing responder, compared with the UWB signal sent by the sensing initiator, a signal received by the sensing responder may be referred to as a UWB echo signal.

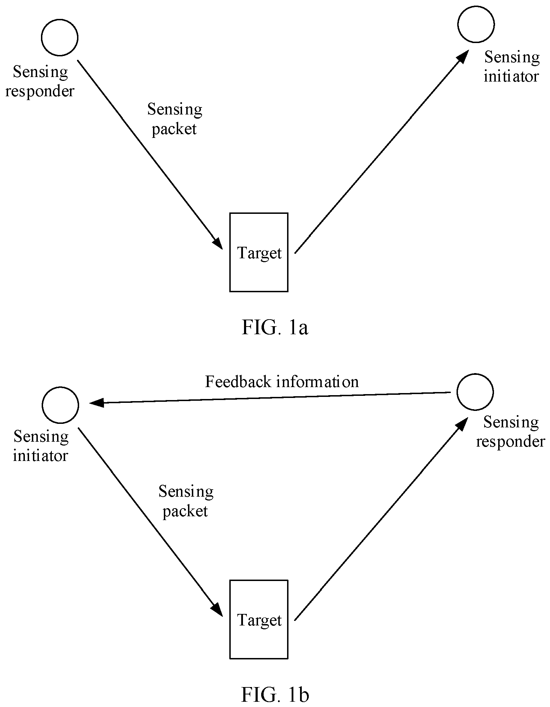

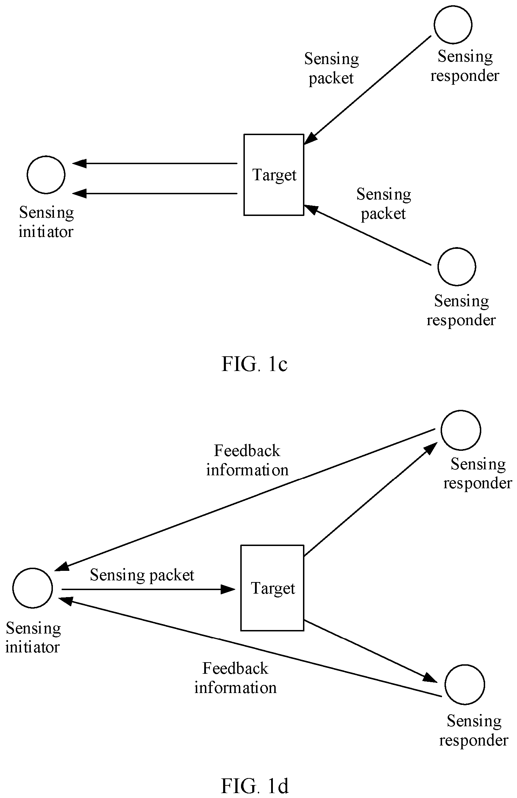

Based on the sensing initiator and the sensing responder shown above, embodiments of this application provide the following four scenarios. It may be understood that FIG. 1a and FIG. 1b may be understood as sensing scenarios based on one sensing responder, and FIG. 1c and FIG. 1d may be understood as sensing scenarios based on a plurality of sensing responders. In addition, in FIG. 1a and FIG. 1c, a sensing initiator is a receiving end of a UWB echo signal, and a sensing responder is a transmitting end of a UWB signal. In FIG. 1b and FIG. 1d, a sensing initiator is a transmitting end of a UWB signal, and a sensing responder is a receiving end of a UWB signal.

As shown in FIG. 1a, because the sensing initiator is the receiving end of a UWB echo signal, the sensing initiator may obtain information related to a target based on the UWB echo signal. Therefore, feedback information does not need to be transmitted between the sensing initiator and the sensing responder through an air interface. As shown in FIG. 1b, because the sensing initiator is the transmitting end of a UWB signal and the sensing responder is the receiving end of a UWB echo signal, the sensing initiator needs to obtain information related to a target based on feedback information sent by the sensing responder. As shown in FIG. 1c, the plurality of sensing responders are all transmitting ends of UWB signals. Similarly, feedback information does not need to be transmitted between the sensing initiator and the plurality of sensing responders through any air interface. However, in the scenario shown in FIG. 1d, the sensing initiator needs to obtain feedback information from the plurality of sensing responders.

A sensing packet (sensing packet) shown in FIG. 1a to FIG. 1b may be understood as a UWB signal. An apparatus that receives the sensing packet may obtain, based on the sensing packet, information related to the target. Optionally, the apparatus that receives the sensing packet may further feed back the information related to the target through feedback information.

With reference to FIG. 1b and FIG. 1d, the feedback information needs to be transmitted between the sensing initiator and the sensing responder. Therefore, embodiments of this application provide a UWB-based information feedback method and an apparatus. When the sensing initiator serves as the transmitting end of a UWB signal, and when the sensing responder serves as the receiving end of a UWB echo signal, the sensing initiator and the sensing responder can effectively transmit the feedback information by using the method provided in embodiments of this application.

In an implementation, a format of the feedback information may be shown in Table 1a.

**Table 1a**

| Subfield (subfield) | Size (size) | | Meaning (meaning) |
|---|---|---|---|
| Information element identity (element ID) | 8 bits | | |
| Length (length) | 8 bits | | |
| Nₜₐₚ | 8 bits | | Number of taps |
| Tap amplitude (amplitude) | Relative amplitude of tap 1 (relative amplitude of tap 1) | 16 bits | The amplitude of tap 1 relative to the path with the strongest amplitude detected (the amplitude (in-phase and quadrature) of tap 1 relative to the path with the strongest amplitude detected) |
| | Relative amplitude of tap 2 | 16 bits | The amplitude of tap 2 relative to the path with the strongest amplitude detected |
| | ... | ... | ... |
| | Relative amplitude of tap Nₜₐₚ | 16 bits | The amplitude of tap Nₜₐₚ relative to the path with the strongest amplitude detected |
| Tap delay (tap delay) | Relative delay of tap 1 (relative delay of tap 1) | 8 bits | The delay of tap 1 relative to the path with a strongest delay detected (the delay of tap 1 relative to the path with the strongest delay detected) |
| | Relative delay of tap 2 | 8 bits | The delay of tap 2 relative to the path with the strongest delay detected |
| | ... | ... | ... |
| | Relative delay of tap 1 Nₜₐₚ | 8 bits | The delay of tap Nₜₐₚ relative to the path with the strongest delay detected |
| AOA | AOA of tap 1 (AOA of tap 1) | 8 bits | AOA of tap 1 |
| | AOA of tap 2 | 8 bits | AOA of tap 2 |
| | ... | ... | ... |
| | AOA of tap Nₜₐₚ | 8 bits | AOA of tap Nₜₐₚ |
| ZOA | ZOA of tap 1 | 8 bits | ZOA of tap 1 |
| | ZOA of tap 2 | 8 bits | ZOA of tap 2 |
| | ... | ... | ... |
| | ZOA of tap Nₜₐₚ | 8 bits | ZOA of tap Nₜₐₚ |

Based on the feedback information shown in Table 1a, signaling overheads of the feedback information are high, and a temporal similarity and a spatial correlation cannot be effectively used for the feedback information.

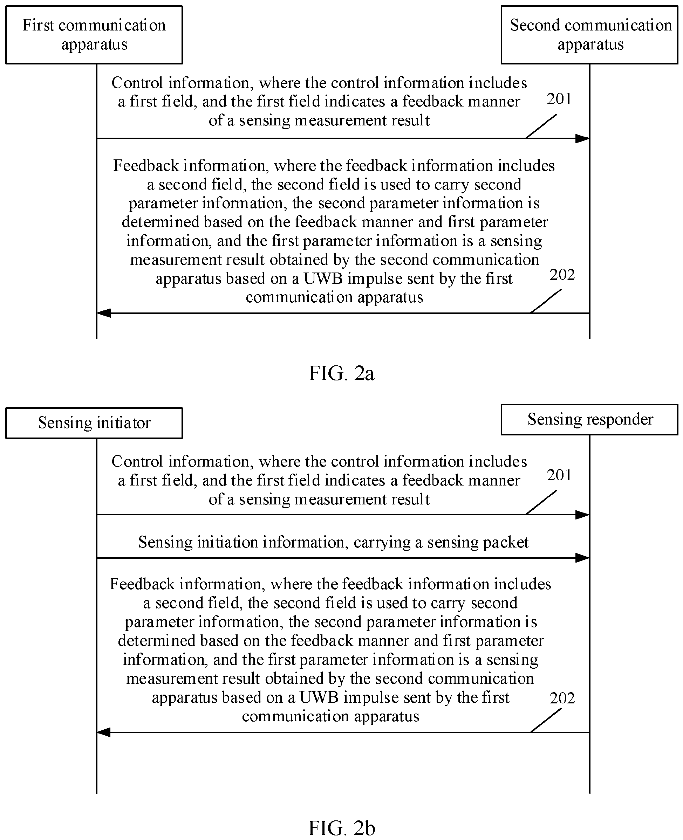

In view of this, this application further provides feedback information, so that signaling overheads of the feedback information can be reduced as much as possible, and a temporal similarity and a spatial correlation of parameters in the feedback information can also be effectively used. FIG. 2a is a schematic flowchart of a UWB-based information feedback method according to an embodiment of this application.

The method shown in FIG. 2a may be applied to a first communication apparatus and a second communication apparatus. The first communication apparatus includes a transmitting end of a UWB signal, and the second communication apparatus includes a receiving end of a UWB echo signal. Alternatively, the first communication apparatus may be understood as a sensing initiator, and the sensing initiator is a transmitting end of a UWB signal; and the second communication apparatus may be understood as a sensing responder, and the sensing responder is a receiving end of a UWB echo signal. For descriptions of the first communication apparatus and the second communication apparatus, refer to the foregoing descriptions of the communication apparatuses. Examples are not enumerated herein. It may be understood that any apparatus that can implement the method provided in embodiments of this application falls within the protection scope of this application. Therefore, the sensing initiator and the sensing responder should not be understood as a limitation on embodiments of this application.

Optionally, the method shown in FIG. 2a may be applied to a scenario shown in FIG. 2b. A sensing initiator initiates a sensing procedure and sends a sensing packet (FIG. 2b is shown by using an example in which the sensing packet is included in sensing initiation information), and a sensing responder responds to the sensing procedure. It may be understood that the scenario shown in FIG. 2b may be further applicable to a controller (controller) and a controlled apparatus

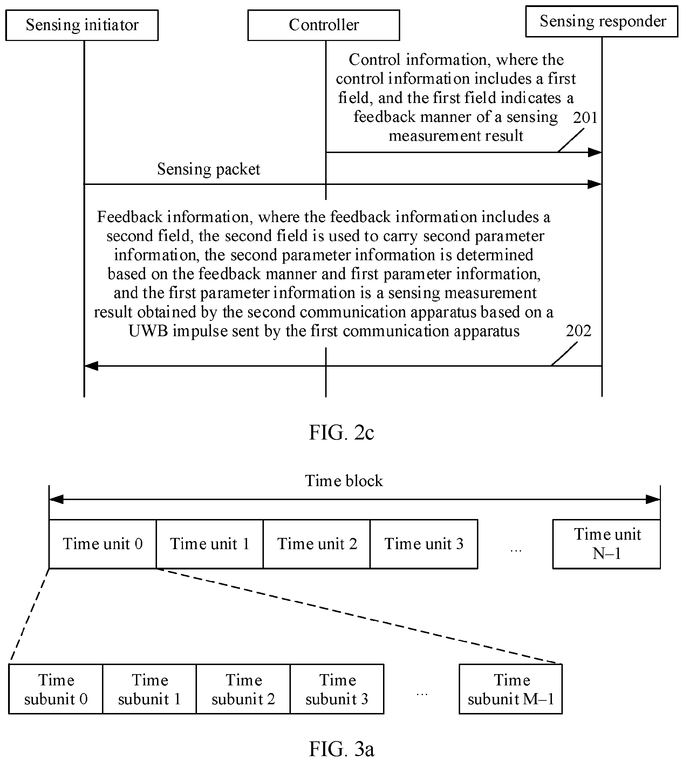

(controlee). Optionally, the method shown in FIG. 2a may be applied to a scenario shown in FIG. 2c. A third party (for example, a controller) serves as an independent physical node to initiate a sensing procedure. The sensing initiator sends the sensing packet, and the sensing responder responds to the sensing procedure, in other words, sends feedback information to the sensing initiator. It may be understood that, in the scenario shown in FIG. 2c, the sensing responder may alternatively send the feedback information to the controller. This is not limited in this embodiment of this application.

As shown in FIG. 2a, the method includes the following steps.

201: The first communication apparatus sends control information to the second communication apparatus, where the control information includes a first field, and the first field indicates a feedback manner of a sensing measurement result. Correspondingly, the second communication apparatus receives the control information.

The control information may be used to control at least one of the feedback manner or a feedback period of the sensing measurement result, or the control information may be understood as control information related to a sensing procedure. The second communication apparatus may feed back, based on the control information, information related to a target, for example, feedback information shown in this embodiment of this application. For example, the control information may be included in a physical layer (physical layer, PHY) protocol data unit (PHY protocol data unit, PPDU). For example, the control information may be carried in a physical layer service data unit (PHY service data unit, PSDU) in the PPDU. A specific location of the control information is not limited in embodiments of this application.

The first field indicates (or bears) the feedback manner of the sensing measurement result. For example, the feedback manner of the sensing measurement result may be used to determine whether content in the feedback information is compressed, or whether the second communication apparatus needs to feed back the sensing measurement result. First parameter information shown in this embodiment of this application may be a sensing measurement result obtained by the second communication apparatus based on a UWB impulse sent by the first communication apparatus. In other words, the second communication apparatus may obtain, based on the UWB impulse, the information related to the target. The information related to the target shown herein may be understood as the first parameter information shown in this embodiment of this application. For example, the first parameter information may include at least one of path loss (path loss) information, a delay (which may also be referred to as a tap delay), a zenith angle of arrival (zenith angle of arrival, ZOA), and an azimuth angle of arrival (azimuth angle of Arrival, AOA). Specific content included in the first parameter information is not limited in this embodiment of this application. It may be understood that the delay may be a delay relative to UWB impulse sending time, or the like. A reference standard for the delay is not limited in this embodiment of this application. The path loss information may also be understood as transmit power attenuation information, power delay information, or the like.

The following describes in detail the first field shown in this embodiment of this application. The first field may include the following several implementations.

### Implementation 1

The feedback manner includes: feedback or no feedback.

In other words, the first field may indicate whether the second communication apparatus feeds back the first parameter information; or the first field indicates whether the second communication apparatus generates the feedback information based on the first parameter information. For example, if the first field indicates that the second communication apparatus feeds back the first parameter information, it indicates that the second communication apparatus needs to generate the feedback information. For example, the first field includes one bit. A value of the first field being 1 indicates that the second communication apparatus needs to feed back the first parameter information. A value of the first field being 0 indicates that the second communication apparatus does not need to feed back the first parameter information. It may be understood that the foregoing values of the first field are only examples, and should not be construed as a limitation on this embodiment of this application.

Optionally, when the first field indicates that the second communication apparatus needs to feed back the first parameter information, the following may be pre-specified in a standard or a protocol. The second communication apparatus feeds back the first parameter information in an uncompressed manner (which may also be understood as that the content in the feedback information includes information obtained without compressing the first parameter information); or the second communication apparatus feeds back the first parameter information in a manner of differential information (which may also be understood as that the content in the feedback information includes second parameter information obtained by compressing the first parameter information); or the second communication apparatus feeds back the first parameter information in a manner of reference information and differential information (which may also be understood as that the content in the feedback information includes second parameter information obtained by compressing the first parameter information).

It may be understood that, when the feedback manner includes skipping feeding back the first parameter information, the second communication apparatus may discard the first parameter information, or the second communication apparatus includes the obtained first parameter information in subsequent feedback information.

### Implementation 2

The feedback manner includes at least one of a feedback manner based on differential information (which may also be referred to as feeding back a sensing measurement result in a manner of differential information) or a feedback manner based on reference information and differential information (which may also be referred to as feeding back a sensing measurement result in a manner of reference information and differential information).

The differential information is determined based on the first parameter information and the reference information. For example, the differential information may be understood as a variation of a parameter in the first parameter information other than a parameter included in the reference information relative to the specific parameter in the reference information. For example, the differential information may be understood as a variation of a delay in a range relative to a delay in another range. For another example, the differential information may be understood as a variation of a delay at a specific moment relative to a delay at another moment. For descriptions of the differential information and the reference information, refer to specific examples shown below. Examples are not enumerated herein.

It may be understood that when the content in the feedback information is only differential information, reference information in the feedback information may be predefined by a standard or a protocol; or reference information may be included in feedback information earlier than the feedback information.

In Implementation 2, the first parameter information is fed back in a manner of differential information, that is, the feedback information may include at least one of differential information or reference information. Compared with a manner in which the feedback information includes the first parameter information, this manner effectively reduces signaling overheads of the feedback information. Compared with feeding back the first parameter information directly, feeding back the first parameter information in the manner of differential information effectively reduces signaling overheads. Therefore, in Implementation 2, it may be further understood that the feedback information is obtained through compression, or second parameter information needs to be obtained by compressing the first parameter information, and then the second parameter information is carried in the first field.

### Implementation 3

The feedback manner includes at least one of a feedback manner based on differential information, a feedback manner based on reference information and differential information, or no feedback. Alternatively, the feedback manner includes: compressing the first parameter information, skipping feeding back the first parameter information, or skipping compressing the first parameter information. Alternatively, the feedback manner includes: a feedback manner of feeding back the sensing measurement result based on differential information; a feedback manner of feeding back the sensing measurement result based on differential information and reference information; skipping feeding back the sensing measurement result and discarding the obtained current sensing measurement result; or skipping feeding back the sensing measurement result and retaining the obtained current sensing measurement result (for example, feeding back the obtained current sensing measurement result in subsequent feedback information).

For example, a value of the first field may be shown in Table 1b. It may be understood that a relationship between an index and a meaning shown in Table 1b is only an example, and should not be understood as a limitation on this embodiment of this application.

**Table 1b**

| Index (index) | Meaning (meaning) |
|---|---|
| 00 | Differential information |
| 01 | Differential information and reference information |
| 10 | No feedback |
| 11 | Reserved (reserved) |

In Table 1b, the value of the first field being 00 indicates that the second communication apparatus may feed back the first parameter information only in a manner of differential information. For example, the second parameter information in the feedback information may be obtained based on the first parameter information and reference information in feedback information earlier than the feedback information. The value of the first field being 01 indicates that the second parameter information in the feedback information is obtained based on the reference information and the first parameter information in the feedback information. 11 shown in Table 1b is only an example, and should not be understood as a limitation on this embodiment of this application. For example, when the value of the first field is 11, the first field may indicate the second communication apparatus to feed back the first parameter information in an uncompressed manner. In this case, the second parameter information in the feedback information may be the same as the first parameter information. The value of the first field being 10 indicates not to feed back the first parameter information, and the first parameter information may be included in subsequent feedback information, or the first parameter information may be discarded. For example, when it is detected, based on the obtained feedback information, that a parameter of the target changes slightly, the first communication apparatus may indicate, through the first field, not to feed back the first parameter information. Therefore, the second communication apparatus may discard the first parameter information obtained by the second communication apparatus, thereby reducing signaling overheads. For another example, when the first communication apparatus needs to perform a sensing-related procedure with a plurality of second communication apparatuses, to coordinate time between sending feedback information by the second communication apparatuses, the first communication apparatus may indicate, through the first field, not to feed back the first parameter information. In addition, it is considered by default that the first parameter information may be included in subsequent feedback information.

For example, the value of the first field may be shown in at least one of Table 1c or Table 1d. For example, a bit length of the first field is 3 bits, where a 1^{st} bit may indicate whether to retain the current sensing measurement result (as shown in Table 1c), and a 2^{nd} bit and a 3^{rd} bit may indicate a manner of feeding back the sensing measurement result (as shown in Table 1d). For example, when the 2^{nd} bit and the 3^{rd} bit indicate not to feed back the sensing measurement result, the 1^{st} bit may indicate whether to retain the current sensing measurement result. For example, the value of the 1^{st} bit being 0 indicates to discard the first parameter information; or the value of the 1^{st} bit being 1 indicates that the first parameter information may be included in subsequent feedback information. It may be understood that, when the 2^{nd} bit and the 3^{rd} bit indicate a feedback manner based on differential information or a feedback manner based on reference information and differential information, the value of the 1^{st} bit may be ignored, or the 1^{st} bit may indicate to retain the current sensing measurement result (for example, the value of the 1^{st} bit is 1).

**Table 1c**

| Index (index) | Meaning (meaning) |
|---|---|
| 0 | Discard the current sensing measurement result |
| 1 | Retain the current sensing measurement result |

**Table 1d**

| Index (index) | Meaning (meaning) |
|---|---|
| 00 | Differential information |
| 01 | Differential information and reference information |
| 10 | No feedback |
| 11 | Reserved (reserved) |

Increasing the bit length of the first field can diversify feedback manners indicated by the first field, and can further effectively indicate a specific manner of processing the first parameter information by the second communication apparatus. This improves communication efficiency between the first communication apparatus and the second communication apparatus.

It may be understood that the bit length of the first field shown above is only an example. As the bit length of the first field increases, content indicated by the first field becomes diversified.

202: The second communication apparatus sends feedback information to the first communication apparatus, where the feedback information includes a second field, the second field is used to carry the second parameter information, the second parameter information is determined based on the feedback manner and first parameter information, and the first parameter information is a sensing measurement result obtained by the second communication apparatus based on a UWB impulse sent by the first communication apparatus. Correspondingly, the first communication apparatus receives the feedback information.

Before sending the feedback information, the second communication apparatus may generate the feedback information based on the control information. Optionally, the second parameter information may be the same as the first parameter information, that is, the second parameter information may be obtained without compressing the first parameter information. Optionally, the second parameter information may be obtained by compressing the first parameter information. For example, the second parameter information may be determined based on the feedback manner indicated by the first field, the first parameter information, and a predefined compression manner. For another example, the feedback information further includes a third field, and the third field indicates a compression manner. Therefore, the second parameter information may be determined based on the feedback manner indicated by the first field, the compression manner indicated by the third field, and the first parameter information.

For example, the compression manner includes a time-based compression manner or a value-based compression manner. The time-based compression manner may be understood as that parameters whose time is close in the first parameter information serve as a group, to perform differential processing with the reference information (which means to perform differential processing for same parameters), to obtain the differential information; or may be understood that processing is performed based on a time similarity degree, to obtain the reference information and the differential information. For example, a first compression manner may be a compression manner based on a time subunit. For example, a time subunit in a time unit may serve as reference information, and parameter information in another time subunit may be differentially set based on the reference information, to obtain differential information. The value-based compression manner may be understood as that parameters whose values are close in the first parameter information serve as a group, to perform differential processing with the reference information (which means to perform differential processing for same parameters), to obtain the differential information; or may be understood that processing is performed based on a value similarity degree, to obtain the reference information and the differential information. It may be understood that, for specific descriptions of the compression manner in this embodiment of this application, refer to the following related descriptions of Table 4 to Table 7. Examples are not enumerated herein.

For example, the compression manner includes a first compression manner and a second compression manner, and compression standards of the first compression manner and the second compression manner are different. It may be understood that the compression manner shown in this embodiment of this application is only an example. Any method in which differential information can be obtained based on first parameter information and reference information, to be carried in a second field falls within the protection scope of this embodiment of this application.

Optionally, when the feedback manner includes the feedback manner based on differential information, or the feedback manner based on reference information and differential information; and the compression manner includes the time-based compression manner or the value-based compression manner, it indicates that the second parameter information is obtained by compressing the first parameter information. Optionally, when the feedback manner includes feeding back the first parameter information, and does not specifically indicate that the first parameter information is fed back in the manner of differential information or the first parameter information is fed back in the manner of reference information and differential information, and the feedback information does not include the third field, it indicates that the first parameter information may be compressed or may not be compressed. This is not limited in this embodiment of this application. It may be understood that for specific descriptions of the feedback manner and the compression manner, refer to the following. Examples are not enumerated herein.

It may be understood that, after receiving the feedback information, the first communication apparatus may obtain information such as a distance, a speed, or attenuation of the target based on the feedback information. The feedback information may be information for one target, or may be information for a plurality of targets. This is not limited in this embodiment of this application. For example, after receiving the feedback information, the first communication apparatus may parse a parameter related to the target, to obtain information about one or more targets.

In embodiments of this application, the first communication apparatus indicates the feedback manner to the second communication apparatus, so that the second communication apparatus can clearly learn of a processing manner of the first parameter information. Therefore, a UWB impulse-based sensing procedure is effectively improved, and communication efficiency of both communication parties is also effectively ensured.

In the method shown in FIG. 2a, in a possible implementation, the control information further includes a fourth field, and the fourth field indicates a number of sensing time subunits included in one sensing time unit. One time unit may be understood as interaction duration of one piece of control information and one piece of feedback information. Alternatively, a process in which the second communication apparatus completes one independent sensing measurement and feedback information reporting may be referred to as one time unit. Alternatively, one time unit may be understood as duration in which the first communication apparatus initiates a sensing procedure and obtains feedback information. For example, one time unit may include a plurality of time subunits. In other words, the plurality of time subunits may form one time unit. For example, one time unit may include M time subunits, and M is a positive integer.

As an example, a number of time subunits may indicate a period of feedback information. For example, the number of time subunits is proportional to the period of feedback information. As an example, a number of time subunits may alternatively indicate sending time of feedback information. For example, the sending time of the feedback information may be located in the last one or more time subunits in one time unit. As an example, a number of time subunits may alternatively indicate periods of sensing procedures performed by the first communication apparatus and the second communication apparatus. For example, the time unit may also be referred to as a sensing time unit or a sensing round (sensing round), and the time subunit may also be referred to as a sensing time subunit or a sensing slot (sensing slot). Specific names of the time unit and the time subunit are not limited in this embodiment of this application. It may be understood that the following description about the sensing round is also applicable to the sensing time unit, and the description about the sensing slot is also applicable to the sensing time subunit.

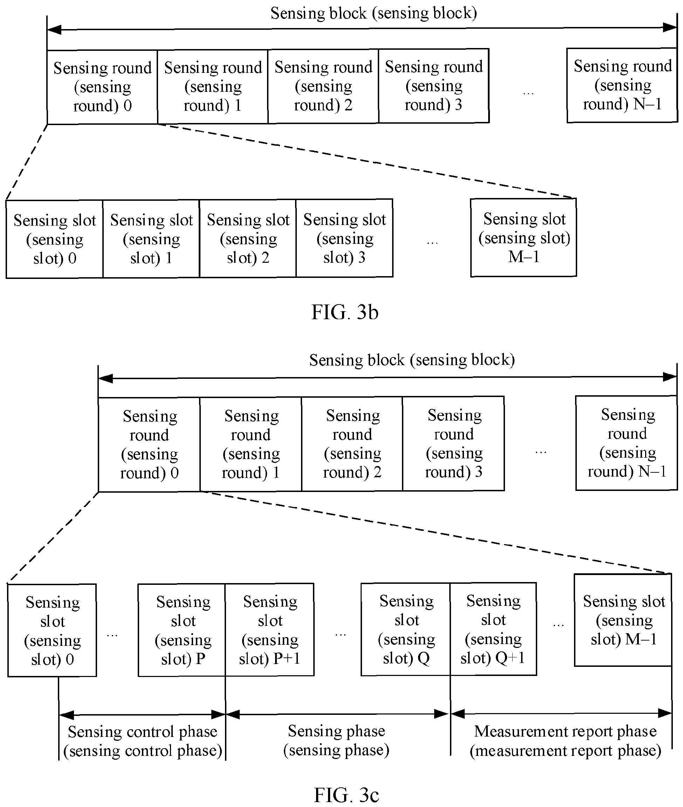

Because the first communication apparatus and the second communication apparatus may perform a plurality of sensing procedures, a time block is further provided in an embodiment of this application. As shown in FIG. 3a, one time block may include N time units, where N is a positive integer, and one time unit may include M time subunits. It may be understood that the time block may also be referred to as a sensing time block, a UWB-based sensing time block, a sensing block (sensing block), or the like. A specific name of the time block is not limited in embodiments of this application. For ease of description, the following uses a sensing block, a sensing round, and a sensing slot shown in FIG. 3b as an example to describe the method provided in embodiments of this application. It may be understood that, for a description of FIG. 3b, refer to FIG. 3a.

For example, the sensing block may be a period of time specially used for sensing, each sensing block may be partitioned into several sensing rounds, and each sensing round may be used to complete one independent sensing measurement and result reporting. Each sensing round may be partitioned into several sensing slots, and each sensing slot may be used to transmit at least one sensing packet (for sensing). One sensing slot may correspond to one or more sensing packets. Therefore, a second communication apparatus may sense a target for a plurality of times in one sensing round. Based on the sensing packet, the second communication apparatus may obtain information such as path loss information, a delay, an AOZ, and an AOA. It may be understood that each sensing packet may include one or more UWB impulses. Because the second communication apparatus obtains a measurement report result based on the UWB impulse, the measurement report result may also be understood as a channel impulsive response (channel impulsive response, CIR) feedback parameter, a CIR parameter, CIR information, or the like. First parameter information or second parameter information may also be understood as a CIR feedback parameter, a CIR parameter, or the like.

FIG. 3c is a diagram of performing a sensing procedure in a sensing round according to an embodiment of this application. As shown in FIG. 3c, in a sensing control phase (sensing control phase), a first communication apparatus may send control information (which may also be referred to as sensing control information (sensing control message)) to a second communication apparatus. (For a description of the control information, refer to the control information shown in FIG. 2a, or refer to the control information shown in Table 2 below.) In a sensing phase (sensing phase), the first communication apparatus may send a plurality of sensing packets to the second communication apparatus. In a measurement report phase (measurement report phase), the second communication apparatus may send feedback information (which may also be referred to as measurement information, measurement report information, or the like) to the first communication apparatus. The sensing control phase may correspond to one or more sensing slots, the sensing phase may correspond to a plurality of sensing slots, and the measurement report phase may correspond to one or more sensing slots. P in FIG. 3c is a positive integer less than Q, and Q is a positive integer less than M. For example, P+1 is less than Q, and Q+1 is less than or equal to M-1. With reference to FIG. 3c, the following uses an example to describe the control information shown in FIG. 2a.

For example, the control information includes a first field and a fourth field, where the first field indicates a feedback manner, and the fourth field indicates a number of sensing slots included in one sensing round. The control information may alternatively be other information, where the other information indicates any one or more of the following items: duration of a sensing slot, duration of a sensing block, a number of sensing rounds included in one sensing block, or a pulse repetition frequency (pulse repetition frequency, PRF). Duration of each sensing slot may be the same, and duration of each sensing round may be the same. The duration shown in this embodiment of this application may also be referred to as duration, a time length, or the like.

The control information may be understood as information about update control performed by a sensing initiator on CIR feedback of a sensing responder. Information shown in Table 2 may also be referred to as a sensing control information element (information element, IE) or an advanced sensing control IE (advanced sensing control IE). In other words, the information shown in Table 2 may be understood as one IE in the control information, and another IE in the control information is not limited in this embodiment of this application.

For example, a format of the sensing control IE in the control information may be shown in Table 2.

**Table 2**

| Field (field) | Size (size) | Description (description) |
|---|---|---|
| Sensing block duration (sensing block duration) | 3 octets (octets) | Unsigned integer, indicating duration of a sensing block |
| Sensing round duration (sensing round duration) | 1 octet (octet) | Unsigned integer, indicating a number of sensing slots in a sensing round |
| Sensing slot duration (sensing slot duration) | 2 octets (octets) | Unsigned integer, indicating duration of a sensing slot |
| Pulse repetition frequency (pulse repetition frequency, PRF) | 4 bits (bits) | Pulse repetition frequency |
| Indicator for CIR update (indicator for CIR update) | 2 bits (bit) | 00: differential information for feeding back CIR |
| | | 01: reference information and differential information for feeding back CIR |
| | | 10: No CIR is fed back in a current sensing round |
| | | 11: reserved (reserved) |

The indicator for CIR update may be understood as the first field, and the sensing slot duration may be understood as the fourth field. The sensing block duration and the sensing slot duration may use a sensing scheduling time unit (sensing scheduling time unit, SSTU) as a unit. Specific duration of the SSTU is not limited in embodiments of this application. For example, the duration of the SSTU may be preset by a protocol or a standard, or negotiated by both communication parties.

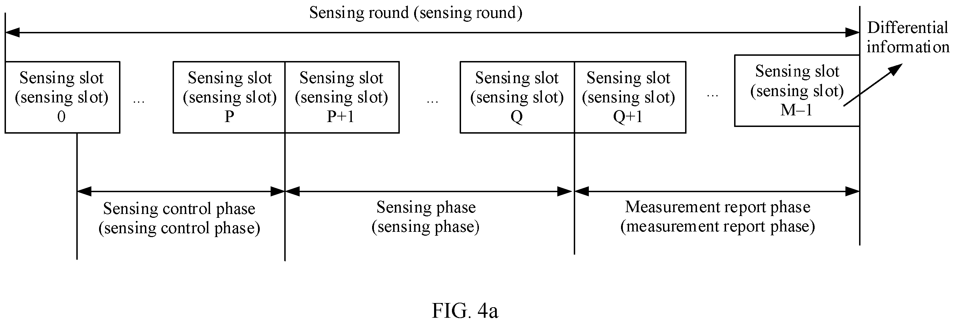

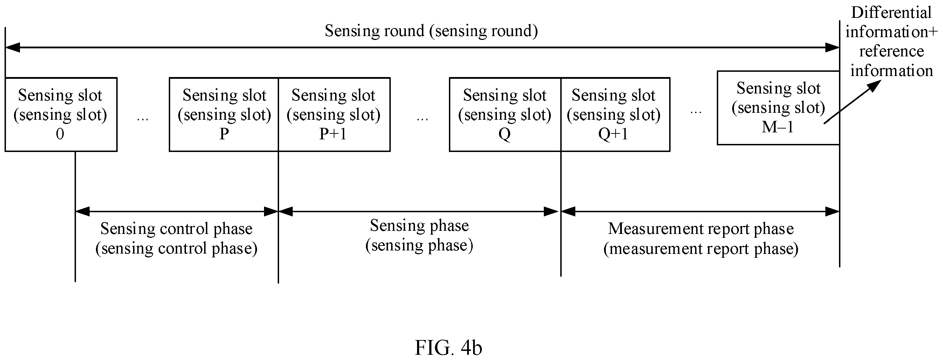

As shown in Table 2, when the indicator for CIR update is 00, an impact on the measurement reporting phase is shown in FIG. 4a. In feedback information, first parameter information is indicated by differential information. For example, second parameter information is determined based on reference information and first parameter information in feedback information earlier than the feedback information. The differential information may also be referred to as differential CIR (difference CIR). FIG. 4b shows an impact on a measurement reporting phase when an indicator for CIR update is 01. In feedback information, first parameter information is indicated by differential information and reference information. For example, second parameter information is determined based on the reference information and the first parameter information in the feedback information. When the indicator for CIR update is 10, CIR feedback is not performed in the measurement reporting phase of a current sensing round. Optionally, the first parameter information that needs to be fed back in the current sensing round may be fed back in a subsequent sensing round (for example, a next sensing round or a next sensing round after the next sensing round). To be specific, a CIR parameter in the current sensing round and a subsequent CIR parameter may be transmitted simultaneously when next control information indicates that feedback is required. Optionally, the first parameter information that needs to be fed back in the current sensing round may be discarded.

It may be understood that a size of each field shown in Table 2 is only an example, and should not be understood as a limitation on embodiments of this application.

In a possible implementation, when a moving speed of the target is high, the second communication apparatus may perform feedback more frequently, so that the first communication apparatus can obtain information related to the target in time. When a moving speed of the target is slow, a feedback frequency of the first parameter information may be reduced. Because the feedback information needs to be fed back in a last one or last multiple sensing slots in one sensing round, with reference to FIG. 3c and Table 2, it can be learned that the number of sensing slots included in one sensing round in the control information may indicate a period of the feedback information or a feedback frequency of the feedback information. The number of sensing slots is proportional to the period of the feedback information, and the number of sensing slots is inversely proportional to the feedback frequency of the feedback information. A larger number of sensing slots indicates a longer period of the feedback information or a lower feedback frequency of the feedback information.

For example, when the first communication apparatus requires the second communication apparatus to feed back the first parameter information more frequently, the number of sensing slots that is included in one sensing round and that is indicated in the control information may be reduced, so that the period of the feedback information is shortened or the feedback frequency of the feedback information is increased. For example, the first communication apparatus may obtain a relationship between the period of the feedback information and a change frequency of the target by using a specific detection algorithm, so that after receiving the feedback information, the first communication apparatus determines a feedback period of subsequent feedback information according to the detection algorithm. For example, a variance of a CIR parameter within a period of time may be calculated by using the detection algorithm, or whether the CIR parameter changes dramatically may be detected, to determine content of the sensing control IE of the control information and content in the feedback information.

It should be noted that, for a UWB-based information feedback method shown in Table 2, refer to FIG. 2a. For UWB-based information feedback methods shown in FIG. 3a to FIG. 3c, FIG. 4a, and FIG. 4b, refer to FIG. 2a. Examples are not enumerated herein.

Based on the methods shown in Table 2 and FIG. 2a, the first communication apparatus may indicate a feedback manner of the first parameter information and the feedback frequency of the first parameter information by using the control information. Therefore, when the feedback manner includes a manner of differential information or a manner of differential information and reference information, feedback overheads of the second communication apparatus can be effectively reduced. In addition, because a value of differential information is small compared with that of an uncompressed parameter, a small number of bits may be used to achieve same precision as that obtained when a parameter is uncompressed, thereby effectively ensuring precision of the value.

The following uses an example to describe the compression manner provided in an embodiment of this application.

In a sensing phase, a first communication apparatus may continuously send sensing packets (the sensing packets may be understood as a set of UWB impulse signals within specific a time period), and a second communication apparatus senses a target based on these sensing packets. For example, when receiving a UWB signal in a time period, the second communication apparatus may record parameter information corresponding to the time period. Therefore, parameter information related to the target corresponds to one time period. For example, if one sensing slot corresponds to one sensing packet, the second communication apparatus may perform sampling on time periods in one sensing slot based on the sensing slot, to obtain parameter information of different time periods in one sensing slot. For another example, if one sensing slot corresponds to a plurality of sensing packets, the second communication apparatus may perform sampling on parameters obtained in a part of time periods in a sensing slot, or the like. This is not limited in this embodiment of this application. In other words, the second communication apparatus may perform sampling, based on a sensing packet, on time periods corresponding to one sensing packet (for example, referred to as a sensing snapshot), to obtain parameter information corresponding to different taps in one sensing snapshot.

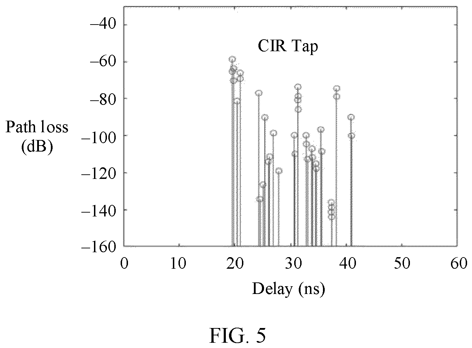

FIG. 5 is a diagram of performing sampling on path loss information according to an embodiment of this application. FIG. 5 shows path loss information in different taps obtained by performing sampling based on time in one sensing snapshot (snapshot). The path loss information may be understood as attenuation information of a UWB signal in a transmission process from being sent to being received. Therefore, a horizontal coordinate shown in FIG. 5 may be understood as a delay from a sending moment to a receiving moment, and a vertical coordinate may be understood as a path loss. For example, when sampling is performed on a parameter within a sensing snapshot, sampling may be performed based on a specific threshold. As shown in FIG. 5, sampling is performed by using an example in which a path loss is greater than -160 dB, to obtain a path loss corresponding to a tap. By analogy, the tap shown in this embodiment of this application may correspond to information such as a path loss and a delay. The tap shown in this embodiment of this application may also be understood as a sampling point, a sampling node, a sensing sampling point, or the like. It may be understood that a sampling process shown in FIG. 5 is only an example, and should not be construed as a limitation on this embodiment of this application.

The following uses the snapshot and the tap as examples to describe the method shown in embodiments of this application. A relationship between a snapshot and a tap may be understood as follows: A second communication apparatus may perform sampling based on a parameter obtained in one snapshot, to obtain parameters corresponding to a plurality of taps. One sensing package may correspond to one snapshot. To be specific, one snapshot may be less than or equal to one sensing slot (one sensing slot corresponds to one or more snapshots), and one sensing round may include a plurality of snapshots.

For example, based on the foregoing description of the snapshot, Table 3 is the third field shown in this embodiment of this application. The third field may also be referred to as a compression mode field (compression mode field), a compression manner field, or the like.

**Table 3**

| Value of a third field | Description (description) |
|---|---|
| 00 | No compression |
| 01 | Snapshot-based compression |
| 10 | Cluster (clustering)-based compression |
| 11 | Reserved (reserved) |

When the value of the third field is 00, it indicates that the first parameter information does not need to be compressed. When the value of the third field is 01, it indicates that the second parameter information is obtained after snapshot-based compression processing is performed on the first parameter information. When the value of the third field is 10, it indicates that the second parameter information is obtained after cluster-based compression processing is performed on the first parameter information. It may be understood that the snapshot-based compression shown above may be understood as a time-based compression manner, and the cluster-based compression may be understood as a value-based compression manner.

For example, when the third field indicates that the compression manner is no compression, the second parameter information may be shown in Table 4. For example, when the value of the third field is 00, the first parameter information does not need to be compressed. In this case, the first parameter information is shown in Table 4. It may be understood that the first parameter information shown in this embodiment of this application may be understood as a CIR parameter in a CIR feedback IE (CIR feedback IE) shown in Table 9 or Table 10 below.

**Table 4**

| Subfield (subfield) | Size (size) (Bits) | | Description (description) |
|---|---|---|---|
| Number of taps of CIR in snapshot 1 (Tap Length of CIR in snapshot 1) | 8 | | Number of the taps of CIR in snapshot 1 |
| Tap 1 of CIR in snapshot 1 of sensing round 1 (tap 1 of CIR in snapshot 1 of sensing round 1) | In-phase component/Amplitude (In-phase Component/Amplitude) | 16 | Signed integer, using a pre-agreed value as a quantization unit (Scaled to pre-agreed level, encoded as a signed integer) |
| | Quadrature component/Phase (Quadrature Component/Phase) | 16 | Signed integer, using a pre-agreed value as a quantization unit |
| | Delay (delay) | 8 | Delay relative to a sending moment (The delay relative to the transmitted time) |
| | AOA | 0 or 8 | AOA of tap 1 in sensing round 1 (AOA of tap 1 in sensing round 1) |
| | ZOA | 0 or 8 | ZOA of tap 1 in sensing round 1 (ZOA of tap 1 in sensing round 1) |
| ... | ... | | ... |
| Tap Num_tap of CIR in snapshot Num_snapshot of sensing round Num_round (Tap Num_tap of CIR in snapshot Num _snapshot of sensing round Num_round) | In-phase component/Amplitude (In-phase Component/Amplitude) | 16 | Signed integer, using a pre-agreed value as a quantization unit |
| | Quadrature component/Phase (Quadrature Component/Phase) | 16 | Signed integer, using a pre-agreed value as a quantization unit |
| | Delay (delay) | 8 | Delay relative to a sending moment |
| | AOA | 0 or 8 | AOA of the tap Num_tap in the snapshot |
| | | | Num_snapshot of the sensing round |
| | | | Num_round |
| | ZOA | 0 or 8 | ZOA of the tap Num_tap in the snapshot |
| | | | Num_snapshot of the sensing round |
| | | | Num_round |

Parameters and bit lengths shown in Table 4 are only examples, and should not be understood as a limitation on embodiments of this application. It may be understood that Num_round, Num_snapshot, and Num_tap shown above are all positive integers. For example, when a number of antennas for receiving a sensing packet in the second communication apparatus is 1, the second parameter information may not include the AOA and the ZOA, that is, the AOA and the ZOA do not occupy any bit. For another example, whether the AOA and the ZOA are present may be indicated through related information (as shown in Table 9 below) in the feedback information. When it is indicated that the AOA and the ZOA are present, the AOA and the ZOA may occupy 8 bits; otherwise, there is no AOA and ZOA. Certainly, the AOA and the ZOA may not be present in the second parameter information simultaneously. This is not limited in embodiments of this application.

For example, the feedback information may include a fifth field (a data mode field shown in Table 9 below), where the fifth field indicates a data mode of the path loss information, and the data mode includes indicating the path loss information in a manner of an amplitude and a phase; or indicating the path loss information in a manner of an in-phase component and a quadrature component. For example, a value of the fifth field being 0 indicates that the path loss information is fed back in a form of an in-phase component and a quadrature component (which may also be referred to as feeding back the path loss information in a form of a real part and an imaginary part), and a value of the fifth field being 1 indicates that the path loss information is fed back in a form of an amplitude and a phase.

For a number Num_round of sensing rounds shown in Table 4, when Num_round is equal to 1, it indicates that a CIR parameter in a current sensing round is fed back. When Num_round is not equal to 1, for example, is greater than or equal to 2, it indicates that the feedback information may include a CIR parameter obtained in a current sensing round and a CIR parameter that is obtained in a sensing round before the current sensing round and that is not fed back. For example, when a value of a first field in control information in a previous sensing round is 10 (as shown in Table 1b), the second communication apparatus in the previous sensing round may not feed back the feedback information. Based on the number of sensing rounds shown in Table 4, it may be indicated to the first communication apparatus that the feedback information includes a CIR parameter of the previous sensing round and the CIR parameter of the current sensing round.

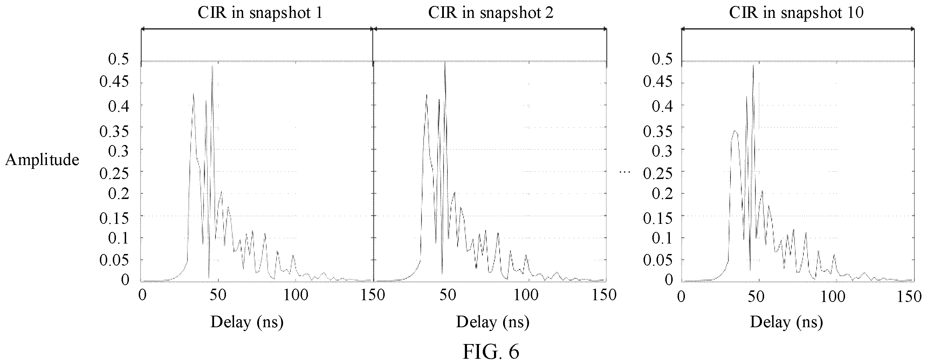

For example, when the third field indicates that the compression manner is snapshot-based compression, the second parameter information may be shown in Table 5. The second parameter information may be understood as a CIR parameter in a CIR feedback IE (CIR feedback IE) shown in Table 9 or Table 10 below. The second parameter information is obtained through snapshot-based compression. A snapshot-based compression process may be shown in FIG. 6. It may be understood that the vertical coordinate in FIG. 5 uses dB as a unit, and a vertical coordinate in FIG. 6 uses a linear value as a unit. Therefore, units of vertical coordinates in FIG. 5 and FIG. 6 are different, however, it should not be understood as a limitation on embodiments of this application.

For example, parameter information that corresponds to a specific snapshot in any sensing round of one or more sensing rounds and that needs to be fed back by an antenna in one or more antennas may be used as the reference information. For example, the second communication apparatus receives UWB signals through a plurality of antennas, and needs to feed back parameter information corresponding to a current sensing round (for example, one sensing round). Therefore, the second communication apparatus may use parameter information that corresponds to a 1^{st} snapshot in the local sensing round and that needs to be fed back through an antenna as the reference information. For another example, the second communication apparatus needs to receive a UWB signal through one antenna, and needs to feed back parameter information corresponding to a plurality of sensing rounds (that is, there are a plurality of sensing rounds that need to be fed back this time). Therefore, the second communication apparatus may use parameter information corresponding to a 1^{st} snapshot in a 1^{st} sensing round as the reference information. For another example, the second communication apparatus needs to receive UWB signals through a plurality of antennas, and needs to feed back parameter information corresponding to a plurality of sensing rounds. Therefore, the second communication apparatus may use parameter information that corresponds to a 1^{st} snapshot in a 1^{st} sensing round and that needs to be fed back through an antenna as the reference information. A difference between the reference information and parameter information corresponding to another snapshot or another antenna is used as the differential information. For another example, the reference information may be reference information in a sensing round earlier than the current sensing round. How to determine the reference information is not limited in embodiments of this application.

**Table 5**

| Subfield (Subfield) | Size (Size) (Bits) | | Description (Description) |
|---|---|---|---|
| Tap length in snapshot 1 (Tap Length of CIR in snapshot 1) | 8 | | Number of taps in snapshot 1 |
| Tap 1 of CIR in snapshot 1 of sensing round 1 (tap 1 of CIR in snapshot 1 of sensing round 1) | In-phase component/Amplitude (In-phase Component/Amplitude) | 12/16 | Signed integer, using a pre-agreed value as a quantization unit |
| | Quadrature component/Phase (Quadrature Component/Phase) | 12/16 | Signed integer, using a pre-agreed value as a quantization unit |
| | Delay (delay) | 6/8 | Delay relative to a sending moment |
| | AOA | 0/6/8 | AOA or differential AOA of tap 1 in snapshot 1 of sensing round 1 (AOA difference of tap 1 in |
| | | | snapshot 1 of sensing round 1) |
| | ZOA | 0/6/8 | ZOA or differential ZOA of tap 1 in snapshot 1 of sensing round 1 (ZOA difference of tap 1 in snapshot 1 of sensing round 1) |
| Tap 2 of CIR in snapshot 1 of sensing round 1 (Tap 2 of CIR in snapshot 1 of sensing round 1) | In-phase component/Amplitude | 12/16 | Signed integer, using a pre-agreed value as a quantization unit |
| | Quadrature component/phase | 12/16 | Signed integer, using a pre-agreed value as a quantization unit |
| | Delay | 6 | Delay relative to a sending moment |
| | AOA | 0/6/8 | AOA or differential AOA of tap 2 in snapshot 1 of sensing round 1 |
| | ZOA | 0/6/8 | ZOA or differential ZOA of tap 2 in snapshot 1 of sensing round 1 |
| ... | ... | | ... |
| Tap Num_tap of CIR in snapshot Num_snapshot of sensing round Num_round (Tap Num_tap of CIR in snapshot Num_snapshot of sensing round Num_round) | In-phase component/Amplitude | 12 | Signed integer, using a pre-agreed value as a quantization unit |
| | Quadrature component/phase | 12 | Signed integer, using a pre-agreed value as a quantization unit |
| | Delay | 6 | Delay relative to a corresponding reference snapshot (The delay relative to the |
| | | | corresponding reference snapshot) |
| | AOA | 0/6 | Differential AOA of tap Num_tap in snapshot Num_snapshot of sensing round Num round (AOA difference of tap N_tap in snapshot N snapshot of sensing round N_round) |
| | ZOA | 0/6 | Differential ZOA of tap Num_tap in snapshot Num_snapshot of sensing round Num round (ZOA difference of tap N_tap in snapshot N snapshot of sensing round N_round) |

It may be understood that, in Table 5, the reference information may be parameter information corresponding to a 1^{st} snapshot of a 1^{st} sensing round in the current sensing round, or may be reference information in a sensing round earlier than the current sensing round. Table 6 shows bit lengths occupied by different parameter information. In Table 6, parameter information corresponding to snapshot 1 is reference information. Therefore, a bit length occupied by parameter information corresponding to snapshot 1 is greater than a bit length occupied by parameter information corresponding to non-snapshot 1.

It should be noted that, in Table 5, the parameter information of the 1^{st} snapshot in the 1^{st} sensing round is used as the reference information. Optionally, when parameter information in one sensing round is fed back, parameter information that is not of the 1^{st} snapshot may also be used as reference information. Optionally, when parameter information in a plurality of sensing rounds is fed back, parameter information in a 1^{st} snapshot that is not of the 1^{st} sensing round, parameter information that is not in a 1^{st} snapshot that is not of the 1^{st} sensing round, or the like, may be used as reference information. In this case, the second parameter information or the feedback information includes information indicating a location of the reference information, and the information indicating the location of the reference information indicates at least one of a sensing round, a sensing slot, or a sensing snapshot in which the reference information is. For example, the information indicating the location of the reference information may be present in the second parameter information in a form of a field (or a subfield, or the like), or be present in the feedback information (Table 10 shown below).

In a possible implementation, the feedback information may further include indication information indicating whether reference information is present. For example, the feedback information may further include a sixth field, and the sixth field indicates whether reference information is present in the feedback information; or the sixth field indicates whether reference information is present in the second parameter information. With reference to the compression manner shown in Table 3, when the value of the third field is 01 or 10, for example, the sixth field indicates that no reference information is present (for example, a value of the sixth field is 0), it indicates that the second parameter information is determined based on the first parameter information and reference information in a sensing round earlier than the local sensing round, that is, the second parameter information may include only differential information. For another example, if the sixth field indicates that reference information is present (for example, a value of the sixth field is 1), it indicates that the second parameter information is determined based on the first parameter information and reference information in the current sensing round, that is, the second parameter information includes both the differential information and the reference information. When the value of the third field is 00 or 11, the feedback information may not include a sixth field, or the value of the sixth field may be ignored.

**Table 6**

| | In-phase component/Am plitude (In-phase Component/Am plitude) | | Quadrature component/Ph ase (Quadrature Component/P hase) | | Delay (Delay) | | AOA | | | ZOA | | |
|---|---|---|---|---|---|---|---|---|---|---|---|---|
| Refer ence snaps hot | Reference informati on present (CIR Reference Present = | 16 | Referenc e informati on present (CIR Referenc | 16 | Reference information present (CIR Reference Present = 1) | 8 | AOA and ZOA present (AOA and ZOA | Refer ence infor matio n prese nt | 8 | AOA and ZOA present (AOA and ZOA | Referen ce informat ion present (CIR Referen | 8 |
| | In-phase component/Am plitude (In-phase Component/Am plitude) | | Quadrature component/Ph ase (Quadrature Component/P hase) | | Delay (Delay) | | AOA | | | ZOA | | |
| | 1) | | e Present = 1) | | | | Present = 1) | (CIR Refer ence Prese nt = 1) | | Present = 1) | ce Present = 1) | |
| | | | | | | | | No refere nce infor matio n prese nt (CIR Refer ence Prese nt = 0) | 6 | | No referenc e informat ion present (CIR Referen ce Present = 0) | 6 |
| | No reference informati on present (CIR Reference Present = | 12 | No reference informati on present (CIR Referenc e Present | 12 | No reference information present (CIR Reference Present = 0) | 6 | No AOA and ZOA present (AOA and ZOA Present = 0) | | 0 | No AOA and ZOA present (AOA and ZOA Present = 0) | | 0 |
| | In-phase component/Am plitude (In-phase Component/Am plitude) | | Quadrature component/Ph ase (Quadrature Component/P hase) | | Delay (Delay) | | | | AOA | | ZOA | |
| | 0) | | = 0) | | | | | | | | | |
| Non-refere nce snaps hot | 12 | | 12 | | 6 | | | | AOA and ZOA present (AOA and ZOA Present = 1) | 6 | AOA and ZOA present (AOA and ZOA Present = 1) | 6 |
| | | | | | | | | | No AOA and ZOA present (AOA and ZOA Present = 0) | 0 | No AOA and ZOA present (AOA and ZOA Present = 0) | 0 |

It should be noted that, when reference information exists in the current sensing round, an in-phase component or amplitude corresponding to the reference snapshot (for example, the 1^{st} snapshot) occupies 16 bits, a quadrature component or phase occupies 16 bits, a delay occupies 8 bits, an AOA occupies 8 bits, and an AOZ occupies 8 bits. An in-phase component or amplitude corresponding to another non-reference snapshot occupies 12 bits, a quadrature component or phase occupies 12 bits, a delay occupies 6 bits, an AOA occupies 6 bits, and an AOZ occupies 6 bits. For example, when no reference information is present in the current sensing round, the in-phase component or amplitude corresponding to snapshot 1 used as the reference snapshot occupies 16 bits, a quadrature component or phase occupies 16 bits, a delay occupies 8 bits, an AOA occupies 8 bits, and an AOZ occupies 8 bits.

It may be understood that the foregoing parameters and bit lengths occupied by the parameters are only examples, and should not be understood as a limitation on embodiments of this application.

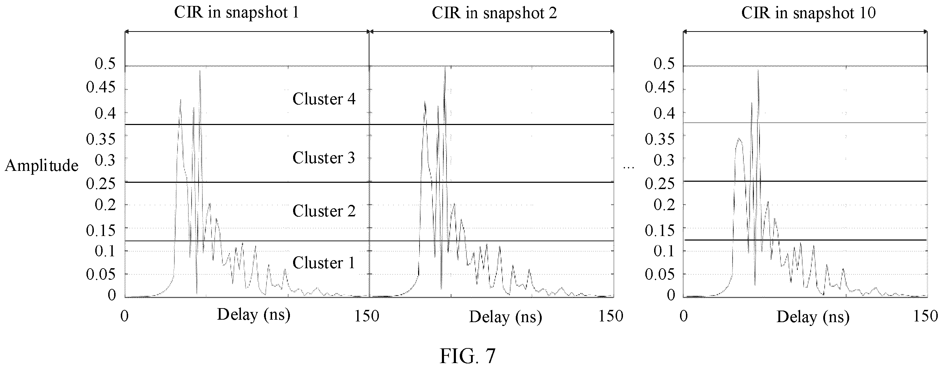

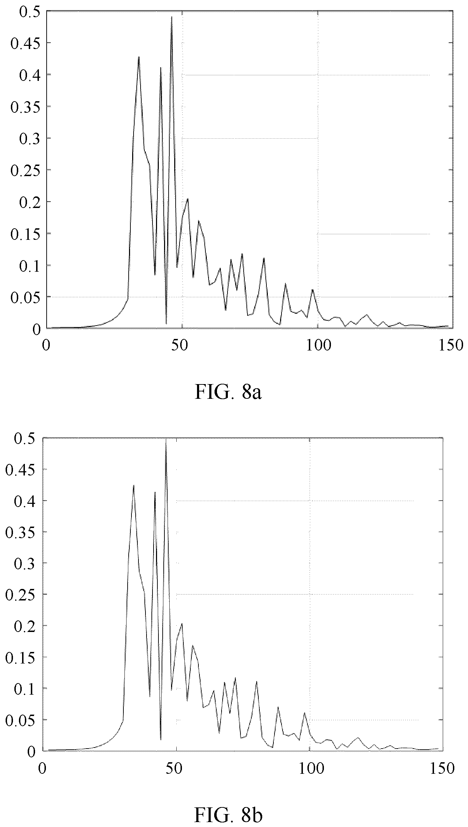

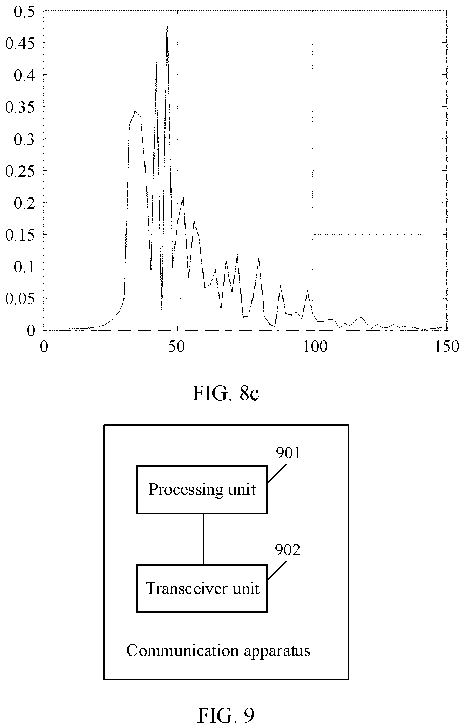

For example, when the third field indicates that the compression manner is cluster-based compression, the second parameter information may be shown in Table 7. The second parameter information is obtained through cluster-based compression. A cluster-based compression process may be shown in FIG. 7. It may be understood that the compression process shown in FIG. 7 is only an example, and should not be construed as a limitation on embodiments of this application. It may be understood that, for CIR in snapshot 1 shown in FIG. 6 and FIG. 7, refer to FIG. 8a. That is, FIG. 8a is obtained after CIR in snapshot 1 in FIG. 6 or FIG. 7 is amplified. For CIR in snapshot 2 shown in FIG. 6 and FIG. 7, refer to FIG. 8b. That is, FIG. 8b is obtained after CIR in snapshot 2 in FIG. 6 or FIG. 7 is amplified. For CIR in snapshot 10 shown in FIG. 6 and FIG. 7, refer to FIG. 8c. That is, FIG. 8c is obtained after CIR in snapshot 10 in FIG. 6 or FIG. 7 is amplified.

For example, the cluster-based compression process may be as follows: CIRs of all snapshots are clustered. For example, clustering may be performed based on a dynamic range, K-means (K-means), or density-based spatial clustering of applications with noise (density-based spatial clustering of applications with noise, DBSCAN). A specific implementation of clustering is not limited in embodiments of this application. Then, one tap (namely, a reference tap) is selected from each cluster as reference information of CIR, differences between the other taps (normal taps) in each cluster and the tap used as the reference information (namely, differences of parameters of corresponding taps) are used as differential information of CIR. As shown in FIG. 7, a tap may be selected from cluster 1 as reference information of cluster 1, so that another tap in cluster 1 is differentiated from the reference tap, and a tap is selected from cluster 2 as reference information of cluster 2. In this way, another tap in cluster 2 is differentiated from the reference tap. Examples are not enumerated herein.

**Table 7**

| Subfield (Subfield) | Size (Size) (Bits) | | Description (Description) |
|---|---|---|---|
| Cluster length (Cluster Length) | 8 | | Number of clusters |
| Tap length in cluster 1 (Tap Length in Cluster 1) | 16 | | Number of taps in a cluster |
| Reference tap in cluster 1 (Cluster 1 Reference Tap) | In-phase component/Amplitude | 12/16 | Signed integer, using a pre-agreed value as a quantization unit |
| | Quadrature component/phase | 12/16 | Signed integer, using a pre-agreed value as a quantization unit |
| | Delay | 6/8 | Delay relative to a sending moment |
| | AOA | 0/6/8 | AOA or differential AOA of the reference tap in cluster 1 (AOA or |
| | | | AOA difference of reference tap in cluster 1) |
| | ZOA | 0/6/8 | ZOA or differential ZOA of the reference tap in cluster 1 (ZOA or ZOA difference of reference tap in cluster 1) |
| | Tap index (Index) | 0/2/3/5 | Indicate at least one of a snapshot or an antenna in which the reference tap is (Indicate the snapshot and antenna of this tap) |
| Non-reference tap in cluster 1 (Cluster 1 Normal Tap) | In-phase component/Amplitude | 12 | Signed integer, using a pre-agreed value as a quantization unit |
| | Quadrature component/phase | 12 | Signed integer, using a pre-agreed value as a quantization unit |
| | Delay | 6 | Delay relative to the reference tap |
| | AOA | 0/6 | AOA or differential AOA of a normal tap in cluster 1 (or AOA difference of normal tap in cluster 1) |
| | ZOA | 0/6 | ZOA or differential ZOA of a normal tap in cluster 1 (ZOA difference of normal tap in cluster 1) |
| | Tap index | 0/2/3/5 | Indicates at least one of a snapshot or an antenna in which the reference tap is |
| ... | ... | | ... |

Table 7 shows only an example of cluster 1. For descriptions of other clusters, refer to cluster 1 shown in Table 7. Examples are not enumerated herein. It may be understood that the reference tap in the cluster 1 may be used as reference information for all the other clusters. For example, a difference between a parameter corresponding to a tap in cluster 2 and a parameter corresponding to the reference tap in cluster 1 is differential information. For descriptions of bit lengths occupied by parameters shown in Table 7, refer to descriptions in Table 5 or Table 6. Details are not described herein again. It may be understood that a cluster in which reference information is located may be a 1^{st} cluster, or may not be the 1^{st} cluster. For example, the second parameter information or the feedback information includes information indicating a location of the reference information, and the information indicating the location of the reference information indicates the cluster in which the reference information is.

The tap index shown in Table 7 is described in detail below.

Table 8 shows a condition corresponding to a value of a tap index. As shown in Table 8, when a bit length occupied by the tap index is 0, it indicates that parameter information fed back in the feedback information is obtained based on one antenna and one snapshot. In other words, the second communication apparatus obtains the first parameter information in one snapshot through one antenna. When a bit length occupied by the tap index is 3, it indicates that parameter information fed back in the feedback information is obtained based on one antenna and a plurality of snapshots. In other words, the second communication apparatus obtains the first parameter information in the plurality of snapshots through one antenna. Therefore, the second parameter information needs to include first parameter information in the plurality of snapshots. To be specific, parameter information that is of a corresponding tap and that is indicated by the tap index is obtained based on a snapshot indicated by the tap index. When a bit length occupied by the tap index is 2, it indicates that parameter information fed back in the feedback information is obtained based on a plurality of antennas and one snapshot. When a bit length occupied by the tap index is 5, it indicates that parameter information fed back in the feedback information is obtained based on a plurality of antennas and a plurality of snapshots. Therefore, the second parameter information needs to include first parameter information that is in a plurality of snapshots and that corresponds to a plurality of antennas. To be specific, parameter information that is of a corresponding tap and that needs to be indicated by a tap index is obtained based on a snapshot indicated by the tap index and an antenna indicated by the tap index. In other words, the tap index may indicate a snapshot to which the tap belongs and a corresponding receiver antenna.

**Table 8**

| Condition | Bit length of the tap index |
|---|---|
| Receiver antenna number = 1, and snapshot number = 1 | 0 |
| Receiver antenna number = 1 | 3 |
| Snapshot number = 1 | 2 |
| Otherwise (otherwise) | 5 |

For example, an antenna number is 1, and a length of a tap index is 3 bits. If a value of the tap index of a tap is 010, it indicates that the tap belongs to a 2^{nd} snapshot. For another example, if a value of a tap index of a tap is 01110, it indicates that the tap belongs to a 6^{th} snapshot of an antenna 1. It may be understood that the value of the tap index may alternatively be 11001, and this also indicates that the tap belongs to the 6^{th} snapshot of the antenna 1.

It may be understood that, bit lengths shown in Table 8 are only examples, and should not be understood as a limitation on embodiments of this application. However, the bit length of the tap index may be related to a bit length of an antenna number indicated in feedback information and a snapshot number indicated in the feedback information. For example, when the receiver antenna number is equal to 1, the bit length of the tap index may be related to a snapshot number indicated in the feedback information. For example, if the field that is in the feedback information and that indicates the snapshot number occupies 3 bits, the tap index may occupy 3 bits. For another example, if the field that is in the feedback information and that indicates the snapshot number occupies 4 bits, the tap index may occupy 4 bits. For example, when the snapshot number is equal to 1, the bit length of the tap index may be related to an antenna number indicated in the feedback information. For example, if the field that is in the feedback information and that indicates the antenna number occupies 2 bits, the tap index may occupy 2 bits. For another example, if the field that is in the feedback information and that indicates the antenna number occupies 3 bits, the tap index may occupy 3 bits. Certainly, the feedback information may not include at least one of the field indicating the antenna number or the field indicating the snapshot number.

It should be noted that when indexes of all taps are the same, a tap index may be included in a 1^{st} tap, and then a delimiter indicates that an index of a subsequent tap is the same as an index of the 1^{st} tap. For example, the delimiter may be located after the reference tap in cluster 1. For example, the delimiter may be set to 8 1s or 8 0s, or 16 1s or 16 0s. A delimiter setting method is not limited in embodiments of this application.

It should be noted that the second parameter information or the feedback information may further include information indicating whether a tap index changes relative to a tap index of a previous tap. The information indicating whether the tap index of a tap changes may exist in the second parameter information or the feedback information in a form of a field (or a subfield, or the like). For example, the information indicating whether the tap index of the tap changes may exist before the tap index field in a form of a field (or a subfield, or the like). Each cluster corresponds to a reference tap. An index of the reference tap may be obtained according to Table 8, and then other non-reference taps in cluster 1 are described in sequence. For example, if cluster 1 includes tap 1 to tap 10, and tap 1 is used as the reference tap, information corresponding to the reference tap of cluster 1 may include a tap index of tap 1. A field that is before the tap index and that indicates whether the tap index changes may be set to a default value (for example, 0 or 1). In addition, a field indicating whether a tap index of a non-reference tap like tap 2 in cluster 1 and the tap index of tap 1 change may be included before the tap index of tap 2, and so on.

With reference to the feedback manner and the compression manner shown above, the following uses examples to describe the feedback information provided in embodiments of this application.

Because the feedback information may be used in the measurement reporting phase, the feedback information may also be referred to as a CIR feedback IE (CIR feedback IE). For example, a format of the feedback information may be shown in Table 9 or Table 10.

**Table 9**

| Bits (Bits): 0 to 7 | 8 and 9 | 10 and 11 | 12 to 14 | 15 | 16 | 17 | 18 to 23 | Octets (Octets): variable |
|---|---|---|---|---|---|---|---|---|
| Element ID (Element ID) field | Compression mode (compression mode) field | Receiver antenna number (Receiver Antenna Number) field | Snapshot number (Snapshot Number) field | AOA and ZOA present field | Data mode (Data Mode) field | Reference information present (CIR Reference Present) field | Reserved (Reserved) | CIR parameter |

**Table 10**

| Bits (Bits): 0 to 7 | 8 and 9 | 10 and 11 | 12 to 14 | 15 | 16 | 17 | 18 to 20 | 21 to 23 | Octets (Octets): variable |
|---|---|---|---|---|---|---|---|---|---|
| Elemen t ID (Eleme nt ID) field | Compressio n mode (compressio n mode) field | Receive r antenna number (Receiv er Antenna Number ) field | Snapsho t number (Snapsh ot Number) field | AOA and ZOA presen t field | Data mode (Data Mode ) field | Reference informatio n present (CIR Reference Present) field | Index of a snapshot in which reference informatio n is | Reserved (Reserve d) | CIR paramet er |

It may be understood that, compared with Table 9, Table 10 adds an index field of the snapshot in which the reference information is. It may be understood that a bit length occupied by the index field of the snapshot in which the reference information may be the same as a bit length occupied by the snapshot number field. In addition, the feedback information shown in Table 10 is more applicable to the snapshot-based compression manner. For example, when the reference information is present, the first communication apparatus may clearly learn, based on an index of a snapshot in which the reference information is, the snapshot to which the reference information belongs.

The element ID may indicate an ID of the feedback information, namely, an ID of the CIR feedback IE.

The compression manner field may indicate whether to compress the first parameter information. For descriptions of the compression manner field, refer to the third field shown above (for example, related descriptions in Table 3). Examples are not enumerated herein.

The receiver antenna number field may indicate a receiver antenna of the second communication apparatus, and a bit length occupied by the receiver antenna number field may be used to determine the bit length occupied by the tap index field shown in Table 8. The snapshot number field may indicate a number of snapshots of CIR that needs to be fed back by the second communication apparatus, and a bit length occupied by the snapshot value field may be used to determine the bit length occupied by the tap index field shown in Table 8. For descriptions of the tap index, refer to related descriptions of Table 8. Details are not described herein again.

The AOA and ZOA present field may indicate whether the AOA and the ZOA need to be included when the first parameter information is fed back in the feedback information. For example, if the AOA and ZOA present field is equal to 1, the CIR parameter includes AOA and ZOA information. If the AOA and ZOA present field is equal to 0, the CIR parameter does not include AOA or ZOA information. It may be understood that when the second communication apparatus receives a sensing packet through one antenna, no AOA or ZOA is present.

The data mode field may indicate that the path loss information is fed back in a manner of an in-phase component and a quadrature component, or is fed back in a manner of an amplitude and a phase. For example, if the data mode field is equal to 0, an in-phase component and a quadrature component are fed back in the path loss information; or if the data mode field is equal to 1, an amplitude and a phase are fed back in the path loss information. For a description of the data mode field, refer to descriptions of the fifth field.

The reference information present field indicates whether reference information is present in the feedback information. For the reference information present field, refer to descriptions of the sixth field. Details are not described herein again.

For descriptions of the CIR parameter field, refer to Table 4, Table 5, and Table 7 above. Details are not described herein again. The CIR parameter field shown in Table 9 or Table 10 may be understood as the second field shown above. For example, the CIR parameter field may be used to carry the first parameter information shown in Table 4, or used to carry the second parameter information shown in Table 5 or Table 7.

In the feedback information shown above, a similarity between different taps or a similarity between different clusters is effectively considered, and correlation between different antennas is further considered, so that a time similarity and a spatial correlation of CIR parameter feedback are effectively used.

In some implementations of this application, Table 9 may be further combined with Table 11 and Table 12, or Table 10 may be combined with Table 11 and Table 12. Table 11 is a CIR feedback table header (main header), and Table 11 may indicate an included range. Table 12 may be understood as a range header (range header). Each range may correspond to one Table 12 and one Table 9, or each range may correspond to one Table 12 and one Table 10. For example, one snapshot may include one or more ranges, and one range may include a plurality of taps. For example, the second communication apparatus may first transmit Table 11 to describe the included range, and then for each range, first transmit Table 12, and then transmit Table 9 or Table 10.

**Table 11**

| Field name (field name) | Field Length (field length) (bits) | Description (description) |
|---|---|---|
| Compression | 1 | Set when using deflate compression of fields beyond the first octet (set when using deflate compression of fields beyond the first octet) |
| Reserved (reserved) | 7 | Reserved |
| Number of ranges (number of ranges) | 8 | Number of transmitted CIR ranges (number of CIR ranges transmitted) |

**Table 12**

| Field name (field name) | Field Length (field length) (bits) | Description (description) |
|---|---|---|
| Local antenna number (local | 5 | Antennas associated with a current CIR range (antenna associated with current CIR range) |
| antenna number) | | |
| Slot number (timeslot number) | 3 | Transmitter associated with current CIR range, namely, a TX antenna, where all 1s means the current CIR range is associated with a preamble (transmitted segment associated with current CIR range, i.e., TX antenna; all 1s means the current CIR range is associated with the preamble) |
| Line-of-sight available (line-of sight available) | 2 | Indicate whether a most significant bit (most significant bit MSB) (of slow-moving/stationary) has been searched for and whether a least significant bit (least significant bit LSB) has been found (signals whether (slow-moving/stationary) loss path has been searched for (MSB) and whether it has been found (LSB)) |
| Reserved | 3 | Reserved |
| Target mode (target mode) | 1 | Enabled if the current CIR range includes a target distance-velocity pair instead of a CIR tap amplitude (Enabled if current CIR range contains target distance-velocity pairs instead of CIR tap amplitudes) |
| Range start index (range start index) | 16 | Starting index (sample) of the current range (starting index (sample) of current range) |
| Length of range (Length of range (LoR)) | 10 | Number of taps or elements in the current range (number of taps/elements in current range) |

It may be understood that bit lengths, field values, or the like, in the foregoing tables are only examples, and should not be understood as a limitation on embodiments of this application. Each of the foregoing tables may be separately combined with the method shown in FIG. 2a; or different tables may be combined with each other, and may be combined with the method shown in FIG. 2a.

The foregoing method may be applied to the first communication apparatus and the second communication apparatus. Alternatively, the foregoing method may be further applied to another scenario. For example, in embodiments of this application, a sensing initiator sends control information to a sensing responder, so that the sensing responder can perform feedback based on the control information; and the sensing responder sends feedback information to the sensing initiator, so that a CIR parameter can be effectively fed back, and a compression mode or data mode of the CIR parameter can be indicated to the sensing initiator.

This improves a UWB system-based sensing interaction process, and effectively reduces signaling overheads by feeding back the CIR parameter in a compressed manner.

A communication apparatus provided in an embodiment of this application is described below.

In this application, the communication apparatus is divided into function modules based on the foregoing method embodiments. For example, each function module may be divided to each corresponding function, or two or more functions may be integrated into one processing module. The integrated module may be implemented in a form of hardware, or may be implemented in a form of a software functional module. It should be noted that, in this application, module division is an example, and is merely a logical function division. In actual implementation, another division manner may be used. The following describes in detail the communication apparatuses in embodiments of this application with reference to FIG. 9 to FIG. 11.

FIG. 9 is a diagram of a structure of a communication apparatus according to an embodiment of this application. As shown in FIG. 9, the communication apparatus includes a processing unit 901 and a transceiver unit 902.

In some embodiments of this application, the communication apparatus may be the first communication apparatus or the chip shown above, and the chip may be applied to the first communication apparatus. In other words, the communication apparatus may be configured to perform the steps or functions performed by the first communication apparatus in the foregoing method embodiments.

The transceiver unit 902 is configured to output control information and input feedback information.

For example, the processing unit 901 is configured to: determine control information; and output the control information through the transceiver unit 902, and input feedback information.

It may be understood that the processing unit 901 may further perform processing based on the feedback information, to obtain information such as a speed, a distance, or attenuation of a target.

It may be understood that specific descriptions of the transceiver unit and the processing unit described in this embodiment of this application are merely examples. For specific functions, steps, or the like of the transceiver unit and the processing unit, refer to the foregoing method embodiments. Details are not described herein.

FIG. 9 is reused. In some other embodiments of this application, the communication apparatus may be the second communication apparatus shown above, a chip in the second communication apparatus, or the like. In other words, the communication apparatus may be configured to perform the steps or functions performed by the second communication apparatus in the foregoing method embodiments.

For example, the transceiver unit 902 is configured to input control information, and the transceiver unit 902 is further configured to output feedback information.

For example, the processing unit 901 is configured to determine the feedback information based on the control information.

It may be understood that specific descriptions of the transceiver unit and the processing unit described in this embodiment of this application are merely examples. For specific functions, steps, or the like of the transceiver unit and the processing unit, refer to the foregoing method embodiments. Details are not described herein.

In the foregoing embodiments, for descriptions of the control information, the feedback information, the first field, the second field, the third field, the fourth field, and the like, refer to descriptions in the foregoing method embodiments. Details are not described herein again.

The foregoing describes the first communication apparatus and the second communication apparatus in embodiments of this application. The following describes possible product forms of the first communication apparatus and the second communication apparatus. It should be understood that any form of product having a function of the first communication apparatus in FIG. 9 or any form of product having a function of the second communication apparatus in FIG. 9 falls within the protection scope of embodiments of this application. It should be further understood that the following description is merely an example, and the product forms of the first communication apparatus and the second communication apparatus in embodiments of this application are not limited thereto.

In a possible implementation, in the communication apparatus shown in FIG. 9, the processing unit 901 may be one or more processors. The transceiver unit 902 may be a transceiver, or the transceiver unit 902 may be a sending unit and a receiving unit. The sending unit may be a transmitter, and the receiving unit may be a receiver. The sending unit and the receiving unit are integrated into one component, for example, a transceiver. In this embodiment of this application, the processor and the transceiver may be coupled, or the like. A manner of connecting the processor and the transceiver is not limited in this embodiment of this application. In a process of performing the foregoing method, a process of sending information in the foregoing method may be understood as a process of outputting the foregoing information by the processor. When outputting the information, the processor outputs the information to a transceiver, so that the transceiver transmits the information. After the information is outputted by the processor, other processing may further need to be performed on the information before the information arrives at the transceiver. Similarly, a process of receiving information in the foregoing method may be understood as a process of receiving the input information by the processor. When the processor receives the input information, the transceiver receives the information, and inputs the information into the processor. Further, after the transceiver receives the foregoing information, other processing may need to be performed on the information before the information is inputted into the processor.

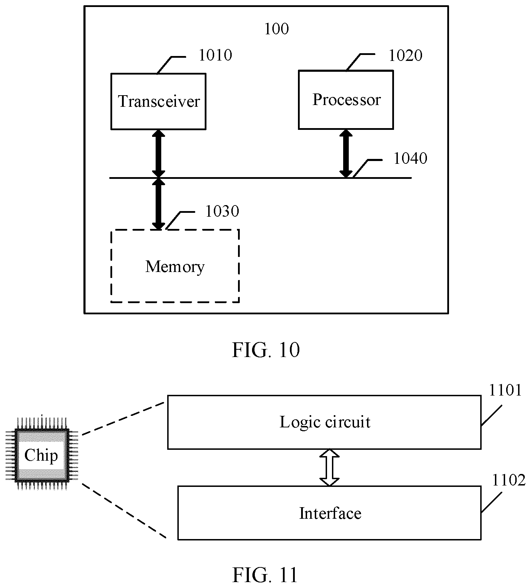

As shown in FIG. 10, a communication apparatus 100 includes one or more processors 1020 and a transceiver 1010.

For example, when the communication apparatus is configured to perform steps, methods, or functions performed by the first communication apparatus, the processor 1020 is configured to determine control information; and the transceiver 1010 is configured to send the control information to a second communication apparatus, and receive feedback information from the second communication apparatus.

For example, when the communication apparatus is configured to perform the step, the method, or the function performed by the second communication apparatus, the transceiver 1010 is configured to receive control information from a first communication apparatus; and the processor 1020 is configured to determine feedback information based on the control information. The transceiver 1010 is further configured to send feedback information to the first communication apparatus.

In embodiments of this application, for descriptions of the control information, the feedback information, the first field, the second field, the third field, the fourth field, and the like, refer to descriptions in the foregoing method embodiments. Details are not described herein again.

In each implementation of the communication apparatus shown in FIG. 10, the transceiver may include a receiver and a transmitter. The receiver is configured to perform a receiving function (or operation), and the transmitter is configured to perform a transmitting function (or operation). In addition, the transceiver is configured to communicate with another device/apparatus through a transmission medium.

Optionally, the communication apparatus 100 may further include one or more memories 1030, configured to store program instructions, data, and/or the like. The memory 1030 is coupled to the processor 1020. The coupling in this embodiment of this application may be an indirect coupling or a communication connection between apparatuses, units, or modules in an electrical form, a mechanical form, or another form, and is used for information interaction between the apparatuses, the units, or the modules. The processor 1020 may cooperate with the memory 1030. The processor 1020 may execute the program instructions stored in the memory 1030. Optionally, at least one of the one or more memories may be included in the processor.

In this embodiment of this application, a specific connection medium between the transceiver 1010, the processor 1020, and the memory 1030 is not limited. In this embodiment of this application, the memory 1030, the processor 1020, and the transceiver 1010 are connected through a bus 1040 in FIG. 10. The bus is represented through a bold line in FIG. 10. A connection manner of other components is merely an example for description and is not limited thereto. The bus may be classified into an address bus, a data bus, a control bus, and the like. For ease of representation, only one thick line is for representing the bus in FIG. 10, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or perform the methods, the steps, and the logical block diagrams disclosed in embodiments of this application. The general purpose processor may be a microprocessor or any conventional processor or the like. The steps of the methods disclosed in combination with embodiments of this application may be directly implemented by a hardware processor, or may be implemented by using a combination of hardware and software modules in the processor, or the like.

In this embodiment of this application, the memory may include but is not limited to a nonvolatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application). However, this application is not limited thereto. The memory in embodiments of this application may alternatively be a circuit or any other apparatus that can implement a storage function, and is configured to store the program instructions and/or the data.

For example, the processor 1020 is mainly configured to: process a communication protocol and communication data, control the entire communication apparatus, execute a software program, and process data of the software program. The memory 1030 is mainly configured to store the software program and the data. The transceiver 1010 may include a control circuit and an antenna. The control circuit is mainly configured to perform conversion between a baseband signal and a radio frequency signal and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the communication apparatus is powered on, the processor 1020 may read the software program in the memory 1030, interpret and execute instructions of the software program, and process the data of the software program. When data needs to be sent wirelessly, the processor 1020 performs baseband processing on the to-be-sent data, and then outputs a baseband signal to a radio frequency circuit. The radio frequency circuit performs radio frequency processing on the baseband signal, and then sends a radio frequency signal in a form of electromagnetic wave through the antenna. When data is sent to the communication apparatus, the radio frequency circuit receives a radio frequency signal through the antenna, converts the radio frequency signal into a baseband signal, and outputs the baseband signal to the processor 1020. The processor 1020 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

It may be understood that the communication apparatus described in embodiments of this application may further have more components than those in FIG. 10, and the like. This is not limited in embodiments of this application. The foregoing methods performed by the processor and the transceiver are merely examples. For specific steps performed by the processor and the transceiver, refer to the methods described above.

In another possible implementation, in the communication apparatus shown in FIG. 9, the processing unit 901 may be one or more logic circuits. The transceiver unit 902 may be an input/output interface that is also referred to as a communication interface, an interface circuit, an interface, or the like. Alternatively, the transceiver unit 902 may be a sending unit and a receiving unit. The sending unit may be an output interface, and the receiving unit may be an input interface. The sending unit and the receiving unit are integrated into one unit, for example, an input/output interface. As shown in FIG. 11, the communication apparatus shown in FIG. 11 includes a logic circuit 1101 and an interface 1102. In other words, the processing unit 901 may be implemented by using the logic circuit 1101, and the transceiver unit 902 may be implemented by using the interface 1102. The logic circuit 1101 may be a chip, a processing circuit, an integrated circuit, a system on chip (system on chip, SoC) chip, or the like. The interface 1102 may be a communication interface, an input/output interface, a pin, or the like. For example, FIG. 11 shows an example in which the communication apparatus is a chip. The chip includes a logic circuit 1101 and an interface 1102. It may be understood that the chip shown in this embodiment of this application may include a narrowband chip, an ultra-bandwidth chip, or the like. This is not limited in this embodiment of this application. The step of sending the sensing packet shown above may be performed by the ultra-bandwidth chip, and whether other steps are performed by the ultra-bandwidth chip is not limited in this embodiment of this application.

In this embodiment of this application, the logic circuit and the interface may be coupled to each other. A specific manner of connection between the logical circuit and the interface is not limited in this embodiment of this application.

For example, when the communication apparatus is configured to perform the method, the function, or the step performed by the first communication apparatus, the logic circuit 1101 is configured to determine control information, and the interface 1102 is configured to output the control information and input feedback information. The logic circuit 1101 is further configured to process the feedback information to obtain information related to a target.

For example, when the communication apparatus is configured to perform the method, the function, or the step performed by the second communication apparatus, the interface 1102 is configured to input control information; the logic circuit 1101 is configured to determine feedback information based on the control information; and the interface 1102 is further configured to output the feedback information.

It may be understood that the communication apparatus shown in embodiments of this application may implement the method provided in embodiments of this application in a form of hardware, or may implement the method provided in embodiments of this application in a form of software. This is not limited in embodiments of this application.

In embodiments of this application, for descriptions of the control information, the feedback information, the first field, the second field, the third field, the fourth field, and the like, refer to descriptions in the foregoing method embodiments. Details are not described herein again.

For specific implementations of embodiments shown in FIG. 11, refer to the foregoing embodiments. Details are not described herein again.

An embodiment of this application further provides a wireless communication system. The wireless communication system includes a first communication apparatus and a second communication apparatus. The first communication apparatus and the second communication apparatus may be configured to perform the method in any one of the foregoing embodiments (for example, in FIG. 2a).

In addition, this application further provides a computer program. The computer program is used to implement operations and/or processing performed by the first communication apparatus in the method provided in this application.

This application further provides a computer program. The computer program is used to implement operations and/or processing performed by the second communication apparatus in the method provided in this application.

This application further provides a computer-readable storage medium. The computer-readable storage medium stores computer code. When the computer code is run on a computer, the computer is enabled to perform operations and/or processing performed by the first communication apparatus in the method provided in this application.

This application further provides a computer-readable storage medium. The computer-readable storage medium stores computer code. When the computer code is run on a computer, the computer is enabled to perform operations and/or processing performed by the second communication apparatus in the method provided in this application.

This application further provides a computer program product. The computer program product includes computer code or a computer program. When the computer code or the computer program is run on a computer, operations and/or processing performed by the first communication apparatus in the method provided in this application are/is performed.

This application further provides a computer program product. The computer program product includes computer code or a computer program. When the computer code or the computer program is run on a computer, operations and/or processing performed by the second communication apparatus in the method provided in this application are/is performed.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on an actual requirement to implement the technical effect of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software function unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are only specific implementations of this application, but are not intended to limit the protection scope of this application. Any variation or replacement readily figured out by a person skilled in the art in the technical scope disclosed in this application shall fall in the protection scope of this application. Therefore, the protection scope of this application shall be subject to the protection scope of the claims.

## Claims

1. An ultra wideband UWB-based information feedback method, wherein the method comprises:
sending, by a first communication apparatus, control information to a second communication apparatus, wherein the control information comprises a first field, and the first field indicates a feedback manner of a sensing measurement result; and
receiving, by the first communication apparatus, feedback information from the second communication apparatus, wherein the feedback information comprises a second field, the second field is used to carry second parameter information, the second parameter information is determined based on the feedback manner and first parameter information, and the first parameter information is a sensing measurement result obtained by the second communication apparatus based on a UWB impulse.

2. An ultra wideband UWB-based information feedback method, wherein the method comprises:
receiving, by a second communication apparatus, control information, wherein the control information comprises a first field, and the first field indicates a feedback manner of a sensing measurement result; and
sending, by the second communication apparatus, feedback information to a first communication apparatus, wherein the feedback information comprises a second field, the second field is used to carry second parameter information, the second parameter information is determined based on the feedback manner and first parameter information, and the first parameter information is a sensing measurement result obtained by the second communication apparatus based on a UWB impulse.

3. The method according to claim 1 or 2, wherein the feedback information further comprises a third field, and the third field indicates a compression manner of the first parameter information; and
that the second parameter information is determined based on the feedback manner and first parameter information comprises:
the second parameter information is determined based on the feedback manner, the compression manner, and the first parameter information.

4. The method according to any one of claims 1 to 3, wherein the feedback manner comprises at least one of a feedback manner based on differential information or a feedback manner based on reference information and differential information, and the differential information is determined based on the first parameter information and the reference information.

5. The method according to claim 3 or 4, wherein the compression manner comprises at least one of a time-based compression manner or a value-based compression manner.

6. The method according to any one of claims 1 to 5, wherein the control information further comprises a fourth field, and the fourth field indicates a number of sensing time subunits comprised in one sensing time unit.

7. The method according to any one of claims 1 to 6, wherein the second parameter information comprises at least one of path loss information, a delay, an azimuth angle of arrival AOA, and a zenith angle of arrival ZOA.

8. The method according to claim 7, wherein the feedback information further comprises a fifth field, the fifth field indicates a data mode of the path loss information, and the data mode comprises at least one of a data mode based on an amplitude and a phase or a data mode based on an in-phase component and a quadrature component.

9. The method according to any one of claims 1 to 8, wherein the feedback information further comprises a sixth field, and the sixth field indicates whether reference information is present in the feedback information.

10. The method according to any one of claims 3 to 9, wherein the third field further indicates whether the first parameter information needs to be compressed.

11. The method according to any one of claims 6 to 10, wherein one time block comprises N sensing time units, one sensing time unit comprises M sensing time subunits, and M and N are positive integers.

12. The method according to any one of claims 6 to 11, wherein one sensing time unit is used to execute one sensing procedure, the sensing procedure comprises a sensing control phase, a sensing phase, and a measurement reporting phase, the control information is comprised in the sensing control phase, and the feedback information is comprised in the measurement reporting phase.

13. A first communication apparatus, wherein the apparatus comprises a processing unit and a transceiver unit, and the processing unit is configured to perform the following operations through the transceiver unit:
sending control information, wherein the control information comprises a first field, and the first field indicates a feedback manner of a sensing measurement result; and
receiving feedback information, wherein the feedback information comprises a second field, the second field is used to carry second parameter information, the second parameter information is determined based on the feedback manner and first parameter information, and the first parameter information is a sensing measurement result obtained by a second communication apparatus based on an ultra-wideband UWB impulse.

14. A second communication apparatus, wherein the apparatus comprises a processing unit and a transceiver unit, and the processing unit is configured to perform the following operations through the transceiver unit:
receiving control information, wherein the control information comprises a first field, and the first field indicates a feedback manner of a sensing measurement result; and
sending feedback information, wherein the feedback information comprises a second field, the second field is used to carry second parameter information, the second parameter information is determined based on the feedback manner and first parameter information, and the first parameter information is a sensing measurement result obtained by the second communication apparatus based on an ultra-wideband UWB impulse.

15. The apparatus according to claim 13 or 14, wherein the feedback information further comprises a third field, and the third field indicates a compression manner of the first parameter information; and
that the second parameter information is determined based on the feedback manner and first parameter information comprises:
the second parameter information is determined based on the feedback manner, the compression manner, and the first parameter information.

16. The apparatus according to any one of claims 13 to 15, wherein the feedback manner comprises at least one of a feedback manner based on differential information or a feedback manner based on reference information and differential information, and the differential information is determined based on the first parameter information and the reference information.

17. The apparatus according to claim 15 or 16, wherein the compression manner comprises at least one of a time-based compression manner or a value-based compression manner.

18. The apparatus according to any one of claims 13 to 17, wherein the control information further comprises a fourth field, and the fourth field indicates a number of sensing time subunits comprised in one sensing time unit.

19. The apparatus according to any one of claims 13 to 18, wherein the second parameter information comprises at least one of path loss information, a delay, an azimuth angle of arrival AOA, and a zenith angle of arrival ZOA.

20. The apparatus according to claim 19, wherein the feedback information further comprises a fifth field, the fifth field indicates a data mode of the path loss information, and the data mode comprises at least one of a data mode based on an amplitude and a phase or a data mode based on an in-phase component and a quadrature component.

21. The apparatus according to any one of claims 13 to 20, wherein the feedback information further comprises a sixth field, and the sixth field indicates whether reference information is present in the feedback information.

22. The apparatus according to any one of claims 15 to 21, wherein the third field further indicates whether the first parameter information needs to be compressed.

23. The apparatus according to any one of claims 18 to 22, wherein one time block comprises N sensing time units, one sensing time unit comprises M sensing time subunits, and M and N are positive integers.

24. The apparatus according to any one of claims 18 to 23, wherein one sensing time unit is used to execute one sensing procedure, the sensing procedure comprises a sensing control phase, a sensing phase, and a measurement reporting phase, the control information is comprised in the sensing control phase, and the feedback information is comprised in the measurement reporting phase.

25. A first communication apparatus, comprising a processor and a memory, wherein
the memory is configured to store instructions; and
the processor is configured to execute the instructions, so that the method according to any one of claims 1, and 3 to 12 is performed.

26. A second communication apparatus, comprising a processor and a memory, wherein
the memory is configured to store instructions; and
the processor is configured to execute the instructions, so that the method according to any one of claims 2 to 12 is performed.

27. A first communication apparatus, comprising a logic circuit and an interface, wherein the logic circuit and the interface are coupled; and
the interface is configured to input and/or output code instructions, and the logic circuit is configured to execute the code instructions, so that the method according to any one of claims 1 and 3 to 12 is performed.

28. A second communication apparatus, comprising a logic circuit and an interface, wherein the logic circuit and the interface are coupled; and
the interface is configured to input and/or output code instructions, and the logic circuit is configured to execute the code instructions, so that the method according to any one of claims 2 to 12 is performed.

29. A computer-readable storage medium, wherein the computer-readable storage medium is configured to store a computer program, and when the computer program is executed, the method according to any one of claims 1 and 3 to 12 is performed.

30. A computer-readable storage medium, wherein the computer-readable storage medium is configured to store a computer program, and when the computer program is executed, the method according to any one of claims 2 to 12 is performed.

31. A communication system, comprising a first communication apparatus and a second communication apparatus, wherein the first communication apparatus is configured to perform the method according to any one of claims 1 and 3 to 12, and the second communication apparatus is configured to perform the method according to any one of claims 2 to 12.
